(19) Europäisches Patentamt
European Patent Office
Office européen des brevets

(11) **EP 3 049 760 B1**

(12) **FASCICULE DE BREVET EUROPEEN**

(45) Date de publication et mention
de la délivrance du brevet:
**28.10.2020 Bulletin 2020/44**

(51) Int Cl.:
***G01C 19/72*** *(2006.01)*

(21) Numéro de dépôt: **14790198.7**

(86) Numéro de dépôt international:
**PCT/FR2014/052377**

(22) Date de dépôt: **23.09.2014**

(87) Numéro de publication internationale:
**WO 2015/044580 (02.04.2015 Gazette 2015/13)**

(54) **SYSTÈME INTERFÉROMÉTRIQUE À FIBRE OPTIQUE MULTIAXE ET PROCÉDÉ DE TRAITEMENT D'UN SIGNAL INTERFÉROMÉTRIQUE DANS UN TEL SYSTÈME**

INTERFEROMETRISCHES SYSTEM MIT MULTIAXIALEN GLASFASERN UND VERFAHREN ZUR VERARBEITUNG EINES INTERFEROMETRISCHEN SIGNALS IN SOLCH EINEM SYSTEM

INTERFEROMETRIC SYSTEM WITH MULTIAXIAL OPTICAL FIBRE AND METHOD FOR PROCESSING AN INTERFEROMETRIC SIGNAL IN SUCH A SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2013 FR 1359195**

(43) Date de publication de la demande:
**03.08.2016 Bulletin 2016/31**

(73) Titulaire: **iXBlue**
**78100 Saint-Germain-en-Laye (FR)**

(72) Inventeurs:
• **GUATTARI, Frédéric**
**93300 Aubervilliers (FR)**
• **MOLUCON, Cédric**
**F-78100 Saint Germain en Laye (FR)**
• **FERRAND, Sébastien**
**78000 Versailles (FR)**
• **DUCLOUX, Eric**
**F-92500 Rueil Malmaison (FR)**

(74) Mandataire: **Jacobacci Coralis Harle**
**32, rue de l'Arcade**
**75008 Paris (FR)**

(56) Documents cités:
DE-A1- 2 941 618    US-A- 5 133 600
US-A- 5 294 972    US-A- 5 719 674
US-A- 5 818 589

**Description**

La présente invention se rapporte aux systèmes interférométriques à fibre optique en anneau de Sagnac. Un interféromètre en anneau de Sagnac permet notamment une mesure de rotation autour de l'axe de l'anneau formant le trajet optique. De tels systèmes interférométriques trouvent notamment des applications dans les gyroscopes à fibre optique (ou FOG, voir « The Fiber optic gyroscope », H. Lefèvre, Artech house, 1993).

Un système interférométrique multiaxe comporte plusieurs bobines de fibre optique, par exemple au nombre de trois, solidaires les unes des autres et dont les axes sont disposés le long de différentes directions. Un tel système interférométrique multiaxe permet de mesurer les rotations du système autour de chacun des axes des différentes bobines. De plus, le nombre de bobines de fibre optique peut être augmenté pour fournir des informations redondantes et améliorer les performances du système.

La construction la plus simple d'un système interférométrique multiaxe consiste à disposer plusieurs interféromètres fonctionnant en parallèle avec une seule source de lumière commune, chaque interféromètre comprenant un modulateur optique, une bobine de fibre optique autour d'un axe et un détecteur. L'augmentation du nombre de bobines implique donc généralement une augmentation du nombre de composants optiques et/ou électroniques.

Dans le but de réduire l'encombrement, le nombre de composants opto-électroniques et au final le coût des systèmes interférométriques multiaxes, différentes architectures ont été proposées.

En particulier, il existe différentes architectures de systèmes interférométriques multiaxes dans lesquelles un seul détecteur est relié à plusieurs bobines de fibres optiques.

Le document US 4,815,853 (H. Lefèvre) décrit un système interférométrique à fibre optique tri-axe mettant en œuvre une source commune, trois bobines de fibre optique reliées en série, un photodétecteur commun et un multiplexage temporel des signaux. Dans cette architecture en série, un premier coupleur optique relie la deuxième bobine de fibre de préférence au milieu de la première bobine et un second coupleur optique relie la troisième bobine de préférence au milieu de la deuxième bobine. Selon ce document, on choisit des bobines de même longueur L et on module l'intensité de la source avec une fonction porte de durée $\tau$ et de période de répétition $3\tau$, la source étant allumée pendant la durée $\tau$ et éteinte pendant une durée $2x\tau$ à chaque période de répétition, où $\tau$ représente le temps de transit $\tau$ des faisceaux modulés dans l'une quelconque des bobines de fibre optique, $\tau$ étant défini par la formule :

$$\tau = \frac{L}{v_g}$$

où $v_g$ représente la vitesse de groupe dans la fibre optique. Le photodétecteur reçoit respectivement à l'instant $t+\tau$, un signal interférométrique correspondant au trajet optique de la première bobine, à l'instant $t+2\tau$, un signal interférométrique correspondant à un trajet optique comprenant la première et la deuxième bobine, et, à l'instant $t+3\tau$, un signal interférométrique correspondant au trajet optique des trois bobines en série. Un démultiplexage temporel des signaux permet de calculer les vitesses de rotation relatives à chaque axe, en supposant que ces vitesses restent constantes entre les instants t, $t+2\tau$ et $t+3\tau$. Les fibres de connexion entre bobines rendent ce dispositif sensible au gradient de température, susceptible de provoquer des non-réciprocités induites thermiquement, dues à l'effet Shupe.

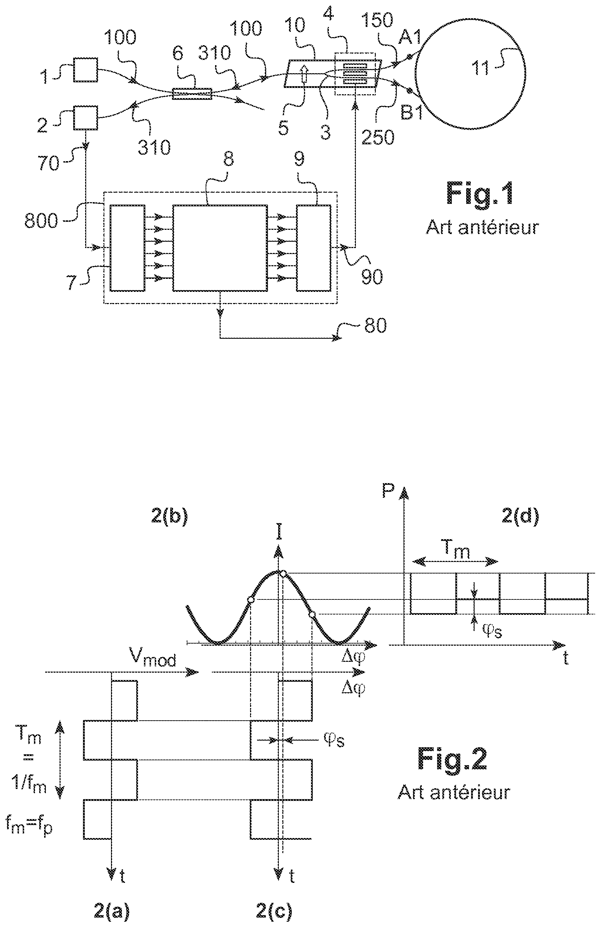

Le document US 5,033,854 (A. Matthews, G. Varty, J. Darling) décrit un système de trois gyroscopes à fibre optique ayant chacun un dispositif optique interférométrique séparé et dans lequel les trois détecteurs sont reliés à un système électronique commun de traitement du signal comprenant un multiplexeur temporel, un convertisseur analogique-numérique (ou ADC) et un système de traitement des signaux (ou DSP). Le multiplexeur comporte un commutateur électronique pour sélectionner un des signaux électriques provenant d'un des différents gyroscopes vers la sortie unique (col. 4 L. 50-61 et Fig. 2a). Une même tension de modulation est appliquée simultanément sur chacun des modulateurs de phase individuels de chaque gyroscope (col. 4 L. 46-49). Chacun des gyroscopes est échantillonné à une vitesse égale à n.Y, où Y est le temps de transit dans une bobine. Ce système électronique effectue un multiplexage par division dans le temps (time division multiplexing).

Le document US 5,719,674 (P. Martin, T. Gaiffe, J. Morisse, P. Simonpietri, H. Lefevre) décrit un système interférométrique à fibre optique en anneau tri-axe, dans lequel trois interféromètres à fibre optique sont reliés à une source commune et à un détecteur commun. Chaque interféromètre comprend une bobine de fibre optique, un coupleur-séparateur à jonction Y et un modulateur optique de phase. Un coupleur 3x3 sépare le faisceau source en trois faisceaux dirigés chacun vers un interféromètre. Le coupleur 3x3 recombine les trois signaux interférométriques pour former le signal détecté. Les longueurs des bobines de fibre optique étant identiques, le temps de transit $\tau$ est identique dans toutes les bobines. Des modulations de phase périodiques différentes sont appliquées sur chaque bobine. Ces modulations de phase ont une même fréquence de modulation $f_m = 1/T_m$ où $T_m$ est égal à $2\tau$ i.e. au double du temps de transit commun $\tau$ et sont décalées temporellement les unes par rapport aux autres d'un intervalle de temps $\delta t_i = T_m/(2.N)$ pour chacun des N interféromètres $I_i$. Un traitement du signal permet de démultiplexer le signal détecté pour extraire respectivement de chaque intervalle de temps $\delta t_i$ le signal de déphasage Sagnac relatif à un interféromètre $I_i$. Ce dispositif comporte donc trois interféromètres indépendants reliés à une même source, ayant chacun une modulation spécifique et un détecteur commun multiplexé temporellement qui mesure à chaque instant un signal interférométrique provenant d'un seul des différents interféromètres. Ce dispositif requiert un fonctionnement en cadence des différents modulateurs optiques.

Le document US 5,294,972 décrit un capteur de vitesse de rotation multiaxial comprenant plusieurs bobines de fibre optiques reliées en parallèle à une source lumineuse puisée, un modulateur optique et un photodétecteur, dans lequel les longueurs des bobines de fibre optiques sont dans des rapports multiples les uns des autres et dans lequel les signaux correspondant aux différentes bobines sont distingués soit en aval du photodétecteur par un démultiplexage temporel, soit au niveau du modulateur de phase, par application d'un déphasage de $\pm\pi.n$.

Un des buts de l'invention est de proposer une architecture de système interférométrique multiaxe alternative aux architectures antérieures.

Un autre but de l'invention est de proposer un système interférométrique multiaxe comprenant un nombre limité de composants opto-électroniques de manière à réduire les coûts et l'encombrement du système.

Encore un autre but de l'invention est de proposer un procédé de traitement du signal adapté à un tel système interférométrique multiaxe.

L'invention trouvera une application particulièrement avantageuse dans les systèmes de navigation ou de guidage embarqués sur des navires de surface, des véhicules sous-marins ou des engins spatiaux. Plus spécifiquement, l'invention trouvera des applications dans les systèmes interférométriques multiaxe destinés à des applications dans les domaines du spatial ou du nucléaire, où le coût des procédures de qualification des composants opto-électroniques incite à réduire drastiquement le nombre de composants électronique en limitant la dégradation des performances du système.

L'invention concerne plus particulièrement un système interférométrique à fibre optique multiaxe selon la revendication 1.

Dans le présent document, la notion de simultanéité de la modulation des faisceaux optiques traduit le fait qu'une même modulation électro-optique est appliquée sans déphasage en entrée des N trajets optiques en anneau reliés en parallèle.

Le système interférométrique multiaxe de l'invention permet avantageusement de déterminer au cours d'une même période de modulation les déphasages Sagnac par rapport à chacun des axes des différentes bobines de fibre optique en utilisant une architecture opto-électronique extrêmement compacte, sans commutateur optique ni commutateur électronique.

Selon un mode de réalisation particulier et avantageux, le système interférométrique à fibre optique multiaxe comprend en outre :

- un deuxième moyen de séparation optique disposé entre la source lumineuse commune et le photodétecteur commun;

- des troisièmes moyens de séparation optique disposés sur le chemin optique du premier faisceau modulé entre les moyens de modulation de phase et les premières extrémités de chacune des N bobines de fibre optique;

- des quatrièmes moyens de séparation optique disposés sur le chemin optique du deuxième faisceau modulé entre les moyens de modulation de phase et les deuxièmes extrémités de chacune des N bobines de fibre optique;

- les troisièmes moyens de séparation optique et les quatrièmes moyens de séparation optique ayant chacun au moins une entrée et N sorties de manière à transmettre simultanément et en parallèle une fraction du premier faisceau modulé sur la première extrémité de chacune des N bobines de fibre optique et une fraction du deuxième faisceau modulé sur la deuxième extrémité de chacune des N bobines de fibre optique et de manière à ce que lesdites fractions du premier faisceau modulé et lesdites fractions du deuxième faisceau modulé se propagent dans des directions opposées dans chacune desdites bobines.

Selon différents aspects particuliers et avantageux, le système interférométrique à fibre optique comporte un circuit optique intégré planaire comportant le premier moyen de séparation optique, les moyens de modulation de phase communs et les troisièmes et quatrièmes moyens de séparation optique.

Avantageusement, le premier moyen de séparation optique comporte une jonction Y.

Selon différents aspects particuliers et avantageux, le système interférométrique à fibre optique comporte un convertisseur numérique analogique adapté pour appliquer une tension de modulation sur les moyens de modulation de phase communs de manière à générer un déphasage modulé à une fréquence de modulation $f_m$.

Selon un mode de réalisation particulier et avantageux, les troisièmes moyens de séparation optique et respectivement les quatrièmes moyens de séparation optique comprennent un ou plusieurs coupleurs 2x2 disposés en série, un coupleur 1xN ou un coupleur 3x3.

Avantageusement, les temps de transit T1, T2 et T3 sont définis comme suit : $T1 \leq 0.9 \times T2$ et $1.1 \times T2 \leq T3$.

L'invention concerne aussi un procédé de mesure interférométrique selon la revendication 8.

Le procédé de mesure interférométrique multiaxe de l'invention permet avantageusement de déterminer simultanément et en parallèle le déphasage Sagnac relatif à plusieurs axes de bobines de fibre optique, sans commutation optique ni commutation électronique et avec une matrice de désalignement simple entre les différents axes. Autrement dit, la matrice de désalignement, décrivant les relations entre chacune des valeurs fournies par le capteur et chacune des mesures que l'on veut faire, est plus aisément diagonalisable, avec des coefficients qui présentent moins de dépendance aux paramètres environnementaux (température, rotation etc..).

Selon différents aspects particuliers et avantageux du procédé de l'invention :

- l'étape d'application d'un déphasage modulé temporellement comprend une modulation en créneau à une fréquence de modulation $f_m$ ;
- la fréquence de modulation $f_m$ est égale à la fréquence propre $f_p$ de l'une des bobines de fibre optique, ladite bobine ayant un temps de transit Ti, et la fréquence propre étant définie comme suit : $f_p$=1/(2.Ti) ;
- la fréquence de modulation $f_m$ est inférieure à la fréquence propre de toutes les bobines de fibre optique ; ou
- la fréquence de modulation $f_m$ est supérieure à la fréquence propre de toutes les bobines de fibre optique, la fréquence de modulation étant inférieure à :

$$ f_m \leq \frac{1}{2 \times (T_{MAX} - T_{\min})} $$

où $T_{MAX}$ représente le maximum des temps de transit T1, T2,...TN de toutes les bobines et $T_{min}$ représente le minimum des temps de transit T1, T2,...TN de toutes les bobines.

Cette description donnée à titre d'exemple non limitatif fera mieux comprendre comment l'invention peut être réalisée en référence aux dessins annexés sur lesquels :

- la figure 1 représente schématiquement un système interférométrique uniaxe à une bobine de fibre optique selon l'art antérieur ;
- la figure 2 représente un exemple de modulation à la fréquence propre $f_p$=1/(2τ) d'un FOG tel qu'illustré sur la figure 1 et de réponse en intensité lumineuse du FOG à cette modulation ;
- la figure 3 représente un exemple de modulation à une fréquence inférieure à la fréquence propre du FOG et la réponse d'un FOG tel qu'illustré sur la figure 1 à cette modulation ;
- la figure 4 représente schématiquement une architecture de système interférométrique à deux bobines de fibre optique selon un exemple de réalisation de l'invention, dans lequel deux bobines sont reliées en parallèle à une source, un modulateur optique et un détecteur communs ;
- la figure 5 représente un exemple de modulation et la réponse d'un système interférométrique à deux bobines tel que représenté sur la figure 4 à cette modulation ;
- la figure 6 représente schématiquement une architecture de système interférométrique multiaxe à trois bobines de fibre optique selon un exemple de réalisation de l'invention, dans lequel trois bobines sont reliées en parallèle à une source, un modulateur optique commun et un détecteur ;
- la figure 7 représente schématiquement l'architecture d'un système interférométrique tri-axe selon un mode de réalisation préféré de l'invention ;
- la figure 8 représente un exemple de modulation et la réponse d'un système interférométrique à trois bobines tel que représenté sur la figure 6 dans le cas où la fréquence de modulation est supérieure à la fréquence propre de chacune des trois bobines ;
- la figure 9 représente un autre exemple de modulation et la réponse d'un système interférométrique à trois bobines tel que représenté sur la figure 6 dans le cas où la fréquence de modulation est inférieure à la fréquence propre de chacune des trois bobines.

Nous détaillons tout d'abord l'architecture d'un système interférométrique mono-axe et le fonctionnement en modulation-démodulation de cet interféromètre en lien avec les figures 1-3.

La figure 1 représente schématiquement un système interférométrique mono-axe selon l'art antérieur. Ce système interférométrique comporte une source lumineuse 1, une bobine de fibre optique 11, un premier coupleur-séparateur optique 3, un deuxième séparateur optique de source 6, un photodétecteur 2 et un système de traitement du signal 800.

Dans le présent document, le terme de faisceau s'applique à une onde optique et le terme signal à un signal électrique ou électronique.

La source lumineuse 1 émet un faisceau source 100 ayant une longueur de décohérence $L_c$. La source lumineuse 1 est de préférence à large bande spectrale de manière à limiter la longueur de décohérence à quelques centaines de microns. La source lumineuse 1 est par exemple une source laser ou diode laser à spectre large (source ASE) ayant une longueur de décohérence de l'ordre de 600 microns. La source lumineuse 1 émet un rayonnement continu et non pulsé. Selon l'invention, l'intensité du rayonnement de la source lumineuse 1 est constante en fonction du temps.

Le premier coupleur-séparateur optique 3, dit séparateur de bobine, sépare spatialement le faisceau source 100 en un premier faisceau et un deuxième faisceau. Un modulateur optique de phase 4 permet de moduler le déphasage entre le premier faisceau 150 et le deuxième faisceau 250. Le premier faisceau 150 modulé est couplé à la première extrémité A1 de la bobine de fibre optique 11. Simultanément, le deuxième faisceau 250 modulé est couplé à la seconde extrémité A2 de la bobine de fibre optique 11. Ainsi, le premier faisceau 150 et le deuxième faisceau 250 modulés se propagent simultanément dans la bobine de fibre optique 11 suivant des directions opposées. Le même coupleur-séparateur optique 3 recombine les faisceaux en sortie de la bobine de fibre optique 11 pour former un faisceau interférométrique 310. Le deuxième séparateur optique de source 6 dirige le faisceau interférométrique 310 issu de la bobine de fibre optique 11 vers le photodétecteur 2.

Dans le mode de réalisation représenté sur la figure 1, un circuit intégré optique 10 comprend avantageusement un polariseur 5, le coupleur-séparateur optique 3, qui est un coupleur à jonction Y, et un modulateur optique 4. Le modulateur optique 4 permet d'appliquer un déphasage optique modulé entre les deux faisceaux contrapropagatifs. Le circuit intégré optique 10 est par exemple constitué d'un substrat de niobate de lithium sur lequel sont fabriqués des guides d'onde optiques configurés pour former le polariseur 5 et le séparateur optique 3 à jonction Y. Des électrodes déposées au voisinage des branches de la jonction Y permettent d'obtenir un modulateur optique de phase 4 parfaitement réciproque. Chacune des deux extrémités A1, A2 de la bobine de fibre optique 11 est reliée par une section de fibre optique à une extrémité des deux guides d'onde en sortie du circuit intégré optique 10.

De façon avantageuse, des liaisons à fibre optique relient la source lumineuse 1, le photodétecteur 2 et le circuit intégré optique 10 au séparateur optique de source 6.

Le séparateur optique de source 6 est par exemple constitué par un coupleur directionnel 2x2 qui permet de diriger le faisceau interférométrique issu de la bobine de fibre optique 11 vers le photodétecteur 2.

Le photodétecteur 2 convertit la puissance du faisceau interférométrique 310 en un signal analogique 70 transmis à un système de traitement du signal.

Le système de traitement du signal 800 comprend par exemple un convertisseur analogique-numérique 7, un processeur numérique 8 ou DSP, par exemple de type FPGA, et un convertisseur numérique-analogique 9. Le processeur numérique 8 permet d'extraire un signal de rotation 80 sur une sortie numérique. Le convertisseur numérique-analogique 9 permet d'appliquer une tension de modulation 90 sur le modulateur optique de phase 4.

L'intensité optique du faisceau interférométrique est une fonction en cosinus du déphasage accumulé entre les deux ondes contrapropagatives lors de la propagation dans la bobine (Fig. 2b). En absence d'effet non-réciproque, ce déphasage est nul. Du fait de l'effet Sagnac, la réponse de l'interféromètre dépend du déphasage non-réciproque entre les deux ondes contrapropagatives. En particulier, lors d'une rotation de l'interféromètre autour de l'axe de la bobine de fibre optique 12, un déphasage Sagnac $\varphi_s$ proportionnel à la vitesse de rotation apparaît.

Les techniques, bien connues de l'homme du métier, de modulation de phase dans les interféromètres à fibre optique sont utilisées pour améliorer la sensibilité et la linéarité de la réponse de l'interféromètre au déphasage dû à l'effet Sagnac.

L'implémentation d'une modulation de phase $V_{mod}$ en forme de créneau d'amplitude par exemple de $\pm \pi/2$, permet ainsi de générer un signal modulé temporellement.

Un traitement de démodulation temporelle du signal détecté permet d'extraire un signal représentatif du déphasage dû à l'effet Sagnac.

La figure 2 illustre l'effet d'une modulation en créneau sur la mesure du déphasage par effet Sagnac.

La figure 2(a) représente, en fonction du temps t, la tension de modulation $V_{mod}$ appliquée au modulateur optique de phase 4 d'un interféromètre en anneau, tel que représenté sur la figure 1. La fréquence de modulation $f_m$ est ici choisie égale à la fréquence propre $f_p$ de l'interféromètre en anneau où $f_p$ est définie comme suit :

$$f_p = 1/(2.\tau)$$

où $\tau$ représente le temps de transit d'une onde modulée se propageant dans la bobine à la vitesse de groupe (ou group transit time).

La figure 2(b) représente l'intensité du faisceau interférométrique en fonction du déphasage $\Delta\varphi$ entre les deux ondes contrapropagatives. La figure 2(c) représente le déphasage optique en sortie de l'interféromètre en présence de la modulation $V_{mod}$ et d'un déphasage Sagnac $\varphi_s$ : ce déphasage, modulé en fonction du temps à la fréquence de modulation $f_m$, est égal à $\pm \pi/2 + \varphi_S$. Toutefois, le photodétecteur 2 ne mesure pas directement le déphasage en sortie de l'interféromètre, mais il mesure la puissance P du signal interférométrique détecté 70. La figure 2(d) représente la puissance P du signal mesuré en sortie de l'interféromètre en fonction du temps. A chaque période de modulation $T_m$, le signal mesuré présente classiquement deux plateaux, séparés par des pics qui correspondent au changement de phase de la modulation appliquée. La différence entre les deux valeurs de puissance est représentative du déphasage non-réciproque dû à l'effet Sagnac $\varphi_s$.

Le signal interférométrique modulé détecté sur la figure 2(d) présente deux niveaux de signal qui sont égaux lorsque l'interféromètre est au repos, et qui sont décalés en présence d'un déphasage par effet Sagnac. Lors du changement de signe de la modulation, le signal détecté passe par zéro, ce qui produit les pics de la figure 2(d). Un traitement du signal est généralement utilisé pour supprimer ces pics et mesurer la différence entre les deux niveaux de signal liés respectivement aux deux demi-périodes de modulation. Cette différence est représentative d'un déphasage par effet Sagnac $\varphi_s$.

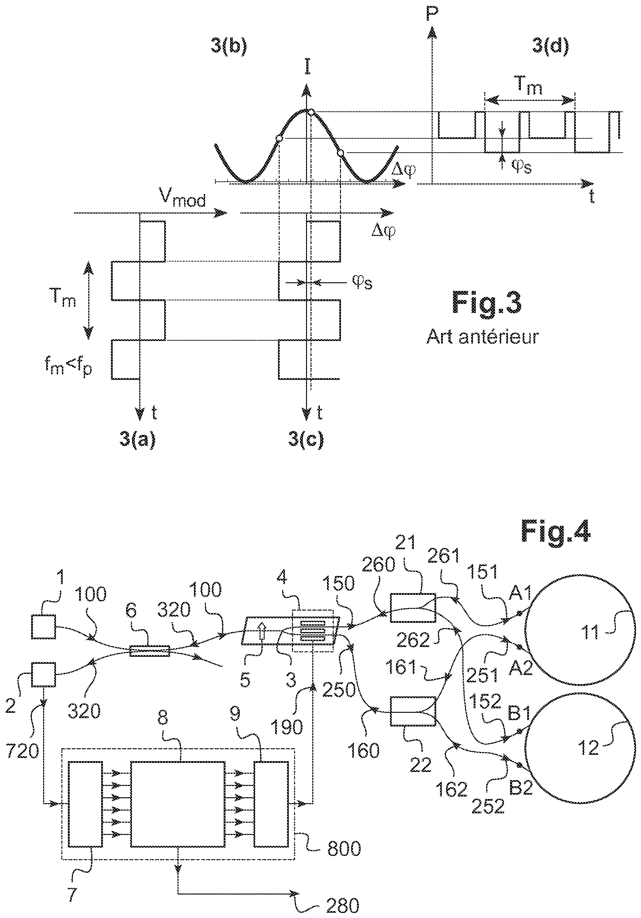

La figure 3 représente l'implémentation d'une modulation de phase en créneau à une fréquence de modulation $f_m$ inférieure à la fréquence propre $f_p$ d'un interféromètre en anneau uniaxe. La figure 3(a) représente la tension de modulation $V_{mod}$ appliquée en fonction du temps $t$ ; la figure 3(b) représente l'intensité du faisceau interférométrique en fonction du déphasage $\Delta\varphi$ entre les deux ondes contrapropagatives; la figure 3(c) représente le déphasage $\Delta\varphi$ en fonction du temps t et la figure 3(d) représente la puissance du signal interférométrique détecté en fonction du temps *t*.

Dans le cas de la figure 3, la tension de modulation $V_{mod}$ appliquée au modulateur optique de phase 4 est une tension périodique de période $T_m$ et en forme de créneau. Dans cet exemple, la fréquence de modulation $f_m$ est inférieure à la fréquence propre de l'interféromètre :

$$f_m < 1/(2\tau)$$

où $\tau$ représente le temps de transit dans la bobine 11. Comparé à la figure 2(d), à chaque période de modulation $T_m$, le signal interférométrique détecté sur la figure 3(d) comporte aussi deux niveaux séparés par des bandes plus larges que les pics de la figure 2(d). Un traitement du signal permet, à chaque période de modulation $T_m$, de mesurer la différence entre les deux niveaux de signal, cette différence étant représentative d'un déphasage par effet Sagnac $\varphi_s$.

Les techniques de modulation décrites en lien avec les figures 2 et 3 sont appliquées à un système interférométrique à une seule bobine de fibre optique.

D'autres types de modulation qu'une modulation en créneau, par exemple une modulation sinusoïdale, peuvent être implémentés sur un système interférométrique tel qu'illustré sur la figure 1. Dans ce cas, le système de traitement du signal est adapté pour traiter le signal détecté en fonction de la modulation appliquée de manière à extraire le déphasage par effet Sagnac de l'interféromètre en anneau.

Dans un système interférométrique multiaxe classique comprenant plusieurs interféromètres à fibre optique reliés à une même source et éventuellement un même détecteur, chaque interféromètre comporte un modulateur de phase propre et un procédé de modulation-démodulation spécifique est implémenté sur chaque interféromètre.

### *Dispositif interférométrique à deux axes*

La figure 4 représente schématiquement un premier mode de réalisation de l'invention dans une architecture de système interférométrique comprenant deux bobines de fibre optique 11 et 12. Les mêmes éléments apparents sur la figure 1 sont repérés par les mêmes signes de référence. En particulier, le système de la figure 4 comporte des composants optiques communs : une source lumineuse 1, un photodétecteur 2 et un modulateur optique de phase 4.

Le système de la figure 4 comporte une première bobine de fibre optique 11 et une deuxième bobine de fibre optique 12. La première bobine de fibre optique 11 a une première extrémité A1 et une deuxième extrémité A2. La deuxième bobine de fibre optique 12 a une première extrémité B1 et une deuxième extrémité B2.

On choisit deux bobines 11 et 12 ayant des temps de transit différents, respectivement T1 et T2. Par exemple, les bobines sont fabriquées à partir de fibre optique identiques, mais ont des longueurs différentes. Dans l'exemple de réalisation préféré, la différence de longueur entre les deux bobines est égale à au moins 10% de la longueur totale de la bobine de fibre optique. Dans une variante, on choisit des bobines de fibre optique ayant des propriétés de dispersion différentes de manière à ce que les deux bobines présentent des temps de transit respectifs différents.

On s'intéresse ici au temps de transit de la modulation des signaux, à la fréquence de modulation $f_m$, dans les différentes bobines de fibre optique, et non pas au temps de transit d'un faisceau optique non modulé dans les bobines de fibre optique. Le temps de transit de la modulation est déterminé par la vitesse de groupe dans chacune des bobines de fibre optique.

Comme dans le système uniaxe de la figure 1, le système interférométrique multiaxe de la figure 4 comporte aussi un premier coupleur-séparateur optique 3 et un deuxième séparateur optique de source 6. Le premier coupleur-séparateur optique 3 sépare spatialement le faisceau source 100 en un premier faisceau divisé et un deuxième faisceau divisé.

Le modulateur optique 4 applique un déphasage optique modulé temporellement entre le premier faisceau divisé et le deuxième faisceau divisé de manière à générer un premier faisceau modulé 150 et le deuxième faisceau modulé 250 qui restent séparés spatialement avant d'être injectés dans les bobines de fibre optique.

Le deuxième séparateur optique de source 6 dirige vers le photodétecteur 2 un faisceau interférométrique 320 issu du premier séparateur optique 3 et se propageant en direction opposée du faisceau source 100.

Le système interférométrique multiaxe de la figure 4 comporte en outre un troisième séparateur optique 21 disposé sur le trajet optique du premier faisceau modulé 150 et un quatrième séparateur optique 22 disposé sur le trajet optique du deuxième faisceau modulé 250, et plus précisément entre le modulateur optique 4 et les extrémités des bobines de fibre optique 11 et 12.

De façon avantageuse, pour un système à deux bobines de fibre optique 11 et 12, le troisième et/ou le quatrième séparateur optique comporte un séparateur optique à une entrée et deux sorties. Un séparateur optique à une entrée et deux sorties peut être constitué d'un coupleur à jonction Y ou d'un coupleur à fibre optique à champ évanescent 2x2 dans lequel on n'utilise qu'une des deux entrées.

La voie d'entrée du troisième séparateur optique 21 est reliée par fibre optique à une sortie du modulateur optique de phase 4 et la voie d'entrée du quatrième séparateur optique 22 est reliée par fibre optique à une autre sortie du modulateur optique de phase 4.

Une des deux voies optiques de sortie du troisième séparateur optique 21 est reliée à une première extrémité A1 de la première bobine de fibre optique 11. L'autre voie optique de sortie du troisième séparateur optique 21 est reliée à une première extrémité B1 de la deuxième bobine de fibre optique 12.

De manière analogue, une des deux voies optiques de sortie du quatrième séparateur optique 22 est reliée à la seconde extrémité A2 de la première bobine de fibre optique 11. L'autre voie optique de sortie du quatrième séparateur optique 22 est reliée à la seconde extrémité B2 de la deuxième bobine de fibre optique 12.

Ainsi, le troisième séparateur optique 21 sépare spatialement le premier faisceau modulé 150 en une première fraction du premier faisceau modulé 151 et une deuxième fraction du premier faisceau modulé 152. La première fraction du premier faisceau modulé 151 est injectée sur la première extrémité A1 de la première bobine de fibre optique 11. Simultanément, la deuxième fraction du premier faisceau modulé 152 est injectée sur la première extrémité B1 de la deuxième bobine de fibre optique 12. La première fraction du premier faisceau modulé 151 et la deuxième fraction du premier faisceau modulé 152 sont ainsi appliquées simultanément et en parallèle sur la première extrémité A1, respectivement B1 de chaque bobine de fibre optique 11, respectivement 12. De préférence, le troisième séparateur optique 21 est équi-réparti en puissance de manière à ce que la première fraction du premier faisceau modulé 151 et la deuxième fraction du premier faisceau modulé 152 aient la même amplitude. Toutefois, une différence d'amplitude entre les faisceaux modulés 151 et 152 n'altère pas notablement le fonctionnement du système interférométrique.

De manière analogue, le quatrième séparateur optique 22 sépare spatialement le deuxième faisceau modulé 250 en une première fraction du deuxième faisceau modulé 251 et une deuxième fraction du deuxième faisceau modulé 252. La première fraction du deuxième faisceau divisé 251 est appliquée sur la seconde extrémité A2 de la première bobine de fibre optique 11. Simultanément, la deuxième fraction du deuxième faisceau modulé 252 est appliquée sur la seconde extrémité B2 de la deuxième bobine de fibre optique 12. La première fraction du deuxième faisceau modulé 251 et la deuxième fraction du deuxième faisceau modulé 252 sont ainsi appliquées simultanément et en parallèle sur la seconde extrémité A2, respectivement B2, de chaque bobine de fibre optique 11, respectivement 12. De préférence, le quatrième séparateur optique 22 est équi-réparti en puissance de manière à ce que la première fraction du deuxième faisceau modulé 251 et la deuxième fraction du deuxième faisceau modulé 252 aient la même amplitude.

Ainsi, la première fraction du premier faisceau divisé 151 et la première fraction du deuxième faisceau divisé 251 parcourent la première bobine 11 dans des directions contrapropagatives. Simultanément, la deuxième fraction du premier faisceau divisé 152 et la deuxième fraction du deuxième faisceau divisé 252 parcourent la deuxième bobine 12 dans des directions contrapropagatives.

Le quatrième séparateur optique 22 reçoit d'une part, venant de la deuxième extrémité A2 de la première bobine 11, la première fraction du premier faisceau divisé 161 ayant parcouru la première bobine 11 et, d'autre part, de la deuxième extrémité B2 de la deuxième bobine 12, la deuxième fraction du premier faisceau divisé 162 ayant parcouru la deuxième bobine 12. Le quatrième séparateur optique 22 recombine par superposition ces deux faisceaux 161, 162 ayant parcouru respectivement la première bobine 11 et la deuxième bobine 12 et forme un premier faisceau recombiné 160. On choisit des bobines ayant une différence de temps de transit |T2-T1| correspondant à une différence chemin optique dans la fibre optique supérieure au temps de décohérence de la source, de manière à ce que les faisceaux 161 et 162 n'interfèrent pas entre eux lors de la recombinaison par le séparateur optique 22.

Le troisième séparateur optique 21 reçoit d'une part, à la première extrémité A1 de la première bobine 11, la première fraction du deuxième faisceau divisé 261 ayant parcouru la première bobine 11 et, d'autre part, à la première extrémité B1 de la deuxième bobine 12, la deuxième fraction du deuxième faisceau divisé 262 ayant parcouru la deuxième bobine 12. Le troisième séparateur optique 21 recombine par superposition ces deux faisceaux 261, 262 ayant parcouru respectivement la première bobine 11 et la deuxième bobine 12 et forme un second faisceau recombiné 260. Pour la même raison que détaillée dans le paragraphe précédent, les faisceaux 261 et 262 n'interfèrent pas entre eux lors de la recombinaison par le séparateur optique 21.

Le premier coupleur-séparateur optique 3 reçoit le faisceau recombiné 160 et le faisceau recombiné 260. Le coupleur-séparateur optique 3 superpose les faisceaux recombinés 160 et 260. Plus précisément, le coupleur-séparateur 3 recombine d'une part les faisceaux 151 et 251 ayant parcouru la première bobine avec un temps de transit T1 dans des directions opposées, et d'autre part les faisceaux 152 et 252 ayant parcouru la deuxième bobine 12 avec un temps de transit T2 dans des directions opposées pour former un seul faisceau interférométrique 320. Le deuxième séparateur optique de source 6 dirige le faisceau interférométrique 320 issu des deux bobines de fibre optique 11 et 12 vers le photodétecteur 2. Le faisceau interférométrique 320 est donc constitué par la somme d'un faisceau interférométrique associé à la première bobine 11 et d'un autre faisceau interférométrique associé à la deuxième bobine 12, qui n'interfèrent pas entre eux, du fait de la différence de temps de transit entre les deux bobines. Le détecteur transmet un signal détecté 720 au système de traitement du signal 800. Le système de traitement analyse et décompose le signal détecté 720 pour extraire une mesure 280 du déphasage Sagnac associée à chacune des bobines de fibre optique.

Un système de traitement du signal 800 comprend un convertisseur analogique-numérique 7 ou ADC, un processeur de type DSP 8, par exemple un FPGA, et un convertisseur numérique-analogique 9 ou DAC. L'ADC numérise le signal électrique provenant du détecteur 2. Le DSP 8 est adapté pour traiter le signal numérisé 720 en fonction des temps de transit respectifs T1 et T2 et pour en extraire une série de mesures 280 comprenant une mesure du déphasage Sagnac associé à la première bobine 11 et une mesure du déphasage Sagnac associé à la deuxième bobine 12. Le DAC 9 applique une tension de modulation 190 sur le modulateur de phase 4.

### Procédé de modulation-démodulation dans un système interférométrique à deux axes

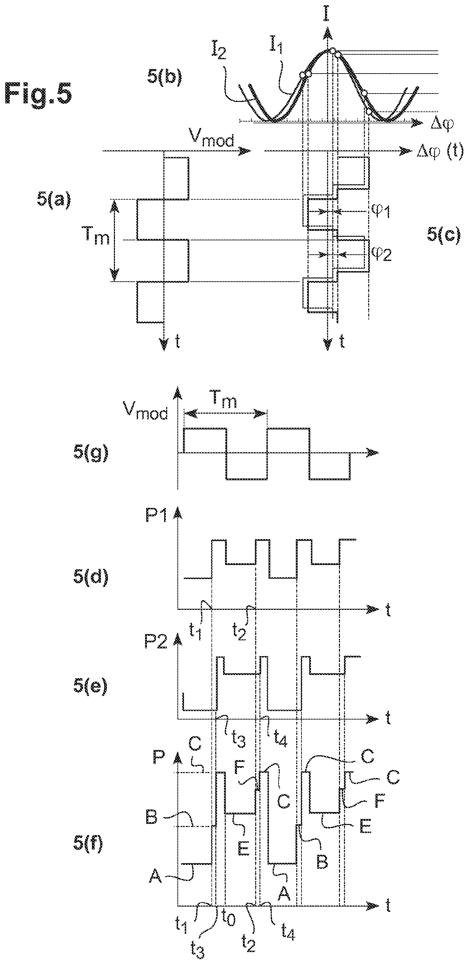

La figure 5 représente l'implémentation d'un procédé de modulation et de démodulation sur un système interférométrique multiaxe tel que décrit en lien avec la figure 4.

La figure 5(a) représente, en fonction du temps t, la tension de modulation $V_{mod}$ appliquée sur le modulateur optique 4 pour introduire un déphasage optique modulé temporellement entre le premier faisceau modulé 150 et le deuxième faisceau divisé 250. De façon avantageuse, la modulation est une modulation en créneau ayant une fréquence de modulation $f_m$ et, de manière équivalente, une période de modulation $T_m = 1/f_m$.

Dans un premier mode de réalisation, illustré sur la figure 5, la tension de modulation $V_{mod}$ a une fréquence de modulation $f_m$ inférieure à la fréquence propre $f_p$ de chacune des deux bobines 11, 12 et un rapport cyclique de 1/2.

On note T1 le temps de transit dans la première bobine 11 et respectivement, T2 le temps de transit dans la deuxième bobine 12. A titre d'exemple, la première bobine 11 est plus courte que la deuxième bobine 12, si bien que T1 < T2.

On choisit une fréquence de modulation $f_m$ inférieure à la fréquence propre de chacune des deux bobines, définies comme suit :

$$f_1 = \frac{1}{2 \times T1}$$

et

$$f_2 = \frac{1}{2 \times T2}$$

La figure 5(b) représente l'intensité $I_1$ du signal interférométrique en fonction du déphasage $\Delta\varphi_1$ entre deux ondes contrapropagatives dans la première bobine 11 et l'intensité $I_2$ du signal interférométrique en fonction du déphasage $\Delta\varphi_2$ entre deux ondes contrapropagatives dans la deuxième bobine 12. Autrement dit, la courbe $I_1$ représente la réponse du gyroscope à fibre optique formé de la première bobine et la courbe $I_2$ représente la réponse du gyroscope à fibre optique formé de la deuxième bobine. La première bobine 11 est sensible à un déphasage Sagnac $\varphi_1$ autour de son axe ; la deuxième bobine 12 est sensible à un déphasage Sagnac $\varphi_2$ autour de son axe. La première bobine 11 étant plus courte que la deuxième bobine 12, la sensibilité de la première bobine 11 est plus faible que la sensibilité de la deuxième bobine 12.

La figure 5(c) représente, en fonction du temps t, le déphasage Sagnac $\varphi_1$ autour de l'axe de la première bobine 11 et le déphasage Sagnac $\varphi_2$ autour de l'axe de la deuxième bobine 12. Le temps de transit T1 dans la première bobine étant différent du temps de transit T2 dans la deuxième bobine, pour une même modulation $V_{mod}$ appliquée sur les faisceaux parcourant les deux bobines, les signaux de déphasage Sagnac $\varphi_1$ autour de la première bobine 11 et $\varphi_2$ autour de la deuxième bobine sont décalés temporellement en proportion de la différence de temps de transit. Plus précisément, la première bobine 11 étant plus courte que la deuxième bobine 12, le déphasage Sagnac $\varphi_1$ de la première bobine 11 se produit avant le déphasage Sagnac $\varphi_2$ de la deuxième bobine 12.

L'invention met à profit le fonctionnement de ligne à retard d'un interféromètre à fibre optique en anneau de Sagnac. La tension de modulation appliquée sur le modulateur de phase commun présente périodiquement des fronts montants aux instants t= 0, $T_m$, et des fronts descendants t= $T_m/2$, $3T_m/2$... Ces fronts montants ou descendants de modulation sont ici assimilés à des impulsions utilisées pour sonder au cours d'une même période de modulation et en parallèle les deux bobines de fibre optique. La première bobine 11 répond à une impulsion de modulation avec un temps de retard égal au temps de transit T1. De manière analogue, la deuxième bobine 12 répond à une impulsion de modulation avec un temps de retard égal au temps de transit T2. Les temps de transit T1 et T2 étant distincts, la réponse de la première bobine arrive sur le détecteur avant la réponse de la deuxième bobine.

On choisit des bobines 11 et 12 ayant une différence de temps de transit |T2-T1| suffisante par rapport à la vitesse maximale de traitement électronique des signaux, qui est déterminée par le système de détection et de traitement du signal. Plus précisément, la différence minimum de temps de transit entre deux bobines de fibre optique est choisie de manière à être supérieure au temps de réponse du système électronique de traitement du signal afin de permettre de séparer temporellement les signaux associés à chacune des bobines de fibre optique. Le temps de réponse du système électronique de traitement est de l'ordre du MHz. La fréquence de modulation de phase $f_m$ est en général de l'ordre de quelques centaines de kHz.

Il est ainsi possible de détecter séparément dans le temps le signal interférométrique associé à la première bobine et le signal interférométrique associé à la deuxième bobine, bien que ces deux faisceaux interférométriques soient superposés optiquement en intensité et soient détectés par un seul et même détecteur.

Ainsi, la figure 5(g) représente le chronogramme de la tension de modulation, respectivement la figure 5(d) le chronogramme de la puissance P1 du signal interférométrique de la première bobine, la figure 5(e) le chronogramme de la puissance du signal interférométrique de la deuxième bobine et la figure 5(f) le chronogramme de la puissance du signal interférométrique détecté qui est la somme des puissances P1 et P2.

Comme illustré sur la figure 5(g), une modulation de phase en créneau est appliquée simultanément à l'entrée des deux bobines avec une période $T_m$.

Avantageusement, on effectue 1+2*2 acquisitions, soit 5 acquisitions par période de modulation pour un système à deux bobines de fibre optique. La position temporelle de ces acquisitions est déterminée par la position des fronts et n'est pas régulièrement répartie sur la période de modulation. On utilise le mode détection de front montant et/ou descendant pour déclencher les acquisitions et enregistrer l'instant d'arrivée et la hauteur de chaque front montant et/ou descendant.

On observe sur le signal de puissance P1 (voir figure 5(d)), un premier front montant à l'instant t1 = T1 (modulo $T_m$) et un deuxième front montant à l'instant t2 = $(T_m/2 + T1)$ (modulo $T_m$) Le déphasage Sagnac $\varphi_1$ lié à la première bobine 11 est égal à la différence entre la hauteur du premier front montant à l'instant t1 et du deuxième front montant à l'instant t2.

De manière analogue, on observe sur le signal de puissance P2 (voir figure 5(e)), un premier front montant à l'instant t3 = T2 (modulo $T_m$) et un deuxième front montant à l'instant t4 = $(T_m/2 + T2)$ (modulo $T_m$). Le déphasage Sagnac $\varphi_2$ lié à la deuxième bobine 12 est égal à la différence entre la hauteur du premier front montant à l'instant t3 et du deuxième front montant à l'instant t4.

Toutefois, le détecteur 2 reçoit à chaque instant la somme de la puissance P1 et la puissance P2.

La figure 5(f) représente la puissance du signal interférométrique détecté qui est la superposition de la puissance P1 et de la puissance P2. Les temps de transit T1 et T2 étant séparés, on observe une première série de fronts montants aux instants t1 = T1 et t3 = T2, puis un front descendant, et une deuxième série de fronts montants aux instants t2 = $(T_m/2 + T1)$ et t4 = $(T_m/2 + T2)$. Les temps de transit T1 et T2 dans les bobines étant différents, le système électronique de détection peut être adapté pour enregistrer dans le signal détecté deux fronts montants aux instants déterminés t1, t3, puis un front descendant à un instant t0 et enfin deux fronts montants t2 et t4.

La puissance détectée P change de niveau aux instants suivants :

- à l'instant t1, P passe d'un niveau A à un niveau B ;
- à l'instant t3, P passe du niveau B à un niveau C ;
- à l'instant t0, P passe du niveau C à un niveau E ;
- à l'instant t2, P passe du niveau E à un niveau F ;
- à l'instant t4, P passe du niveau F au niveau C.

Le signal interférométrique détecté est enregistré non pas à des instants prédéterminés ou à une fréquence prédéfinie, mais à des instants t0, t1, t2, t3, t4 qui sont déclenchés (triggered) par l'arrivée de fronts montants et/ou descendants sur le détecteur.

Le système de traitement permet d'extraire des mesures des niveaux A, B, C, D, E et F, par exemple via des combinaisons linéaires, une mesure du déphasage Sagnac $\varphi$1 dans la première bobine 11 et une mesure du déphasage Sagnac $\varphi$2 lié à la deuxième bobine 12.

Par exemple, le système de traitement du signal est configuré pour calculer la différence de hauteur des fronts mesurés aux instants t1 et t2 pour en déduire une mesure du déphasage Sagnac $\varphi_1$ lié à la première bobine 11, et, respectivement la différence de hauteur des fronts mesurés aux instants t3 et t4 pour en déduire une mesure du déphasage Sagnac $\varphi_2$ lié à la deuxième bobine 12.

On remarque que les mesures de la deuxième bobine sont indépendantes des mesures de la première bobine. Il en découle une matrice de désalignement relativement simple entre les deux axes associés respectivement aux deux bobines, contrairement à une configuration de système multiaxe où les bobines de fibre optique sont reliées en série et où la matrice de désalignement se révèle complexe.

La limite supérieure sur la différence entre les temps de transit des deux bobines est telle que :

$$T2 - T1 \leq T_m/2$$

Le procédé de traitement du signal met ainsi à profit les temps de transit différents des différentes bobines pour séparer temporellement la réponse de chaque bobine de fibre optique.

Ainsi, à partir d'une seule source 1, d'un modulateur de phase 4 commun et d'un seul détecteur 2, le dispositif et le procédé de l'invention permettent d'extraire deux mesures de déphasage Sagnac liés à deux bobines de fibre optique 11 et 12 reliées en parallèle.

De manière complémentaire, le traitement des données permet avantageusement de mesurer un ou plusieurs autres paramètres en plus des déphasages Sagnac, comme par exemple la tension Vpi appliquée au modulateur de phase pour produit un déphasage de Pi radian ou encore la fréquence propre des bobines de fibre optique.

Les systèmes interférométriques et procédés d'acquisition de signal interférométrique de l'art antérieur fonctionnent généralement à une fréquence d'acquisition fixe, par exemple en échantillonnant le signal détecté sur la période de modulation. Au contraire, le système et le procédé d'acquisition du signal interférométrique multiaxe décrit en lien avec les figures 4 et 5 est fonction du temps de transit, autrement dit du retard, de chaque bobine et non pas d'une fréquence associée à chaque bobine.

Le cas illustré sur la figure 5 correspond à une fréquence de modulation $f_m$ inférieure à la fréquence propre des deux bobines.

Dans un mode de réalisation particulier et avantageux, il est possible d'appliquer un asservissement en boucle fermée sur le déphasage Sagnac de l'une des bobines de fibre optique.

Selon un autre mode de réalisation, on choisit une fréquence de modulation $f_m$ supérieure aux fréquences propres des différentes bobines. Ce fonctionnement permet d'exploiter la pleine dynamique du système interférométrique multiaxe. La limite de fréquence de modulation est définie comme suit :

$$f_m \leq 1/(2.(T2 - T1))$$

Dans un autre mode de réalisation, il est aussi possible de choisir la fréquence de modulation $f_m$ égale à la fréquence propre de l'une des bobines :

$$f_m = \frac{1}{2 \times T1} \text{ ou } f_m = \frac{1}{2 \times T2}.$$

Ce mode de réalisation est particulièrement avantageux, car il permet de limiter l'effet Kerr dans la bobine ayant une fréquence propre correspondant à la fréquence de modulation $f_m$. Dans ce but, il est souhaitable de ne pas trop s'écarter de la fréquence propre des différentes bobines. Par conséquent, on choisit avantageusement la fréquence de modulation égale à la fréquence propre d'une bobine de fibre optique, et la différence de temps de transit de manière à ce que la fréquence de l'autre bobine soit proche, par exemple ± 10%, de la fréquence de modulation.

Dans le cas où l'on souhaite obtenir un système interférométrique présentant une sensibilité de même ordre sur les deux bobines de fibre optique, on choisit une faible différence de temps de transit entre les deux bobines de fibre optique.

A contratio, dans un système où l'on accepte une sensibilité moindre sur la première bobine et où on souhaite une sensibilité maximum sur la deuxième bobine, on choisit T1 « T2. Une telle configuration permet de privilégier un axe par rapport à un autre axe du point de vue des performances de biais ou des performances de facteur d'échelle.

D'autres types de modulation, par exemple une modulation en créneau de rapport cyclique différent de 1/2, peuvent être implémentés dans un système et un procédé de mesure interférométrique tel qu'illustré sur les figures 4-5. Dans ce cas, le système de traitement du signal est adapté pour traiter le signal détecté en fonction de la modulation appliquée de manière à extraire le déphasage par effet Sagnac de chaque bobine de l'interféromètre.

### Dispositif interférométrique à trois axes

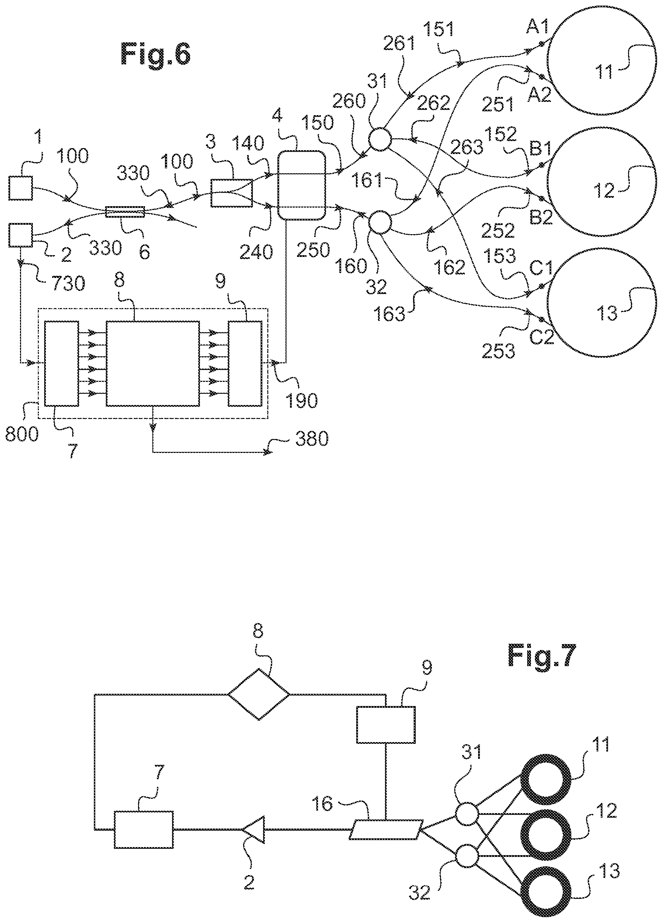

La figure 6 représente schématiquement un autre mode de réalisation d'une architecture de système interférométrique comprenant trois bobines de fibre optique 11, 12 et 13. Les mêmes éléments apparents sur les figures 1 et 4 sont repérés par les mêmes signes de référence. En particulier, le système de la figure 6 comporte une source lumineuse commune 1, un photodétecteur commun 2 et un modulateur optique de phase commun 4.

Comme dans le système biaxe de la figure 4, le système interférométrique triaxe de la figure 4 comporte aussi un premier coupleur-séparateur optique 3 et un deuxième séparateur optique de source 6. Le premier coupleur-séparateur optique 3 sépare spatialement le faisceau source 100 en un premier faisceau divisé 140 et un deuxième faisceau divisé 240. Le deuxième séparateur optique de source 6 dirige vers le photodétecteur 2 un faisceau interférométrique 320 issu du premier séparateur optique 3 et se propageant en direction opposée du faisceau source 100.

Le modulateur optique 4 permet d'appliquer un déphasage optique modulé temporellement entre le premier faisceau divisé 140 et le deuxième faisceau divisé 240 et de générer un premier faisceau modulé 150 et un deuxième faisceau modulé 250.

Le système de la figure 6 comporte une première bobine de fibre optique 11, une deuxième bobine de fibre optique 12 et une troisième bobine de fibre optique 13. La première bobine de fibre optique 11 a une première extrémité A1 et une deuxième extrémité A2. La deuxième bobine de fibre optique 12 a une première extrémité B1 et une deuxième extrémité B2. La troisième bobine de fibre optique 13 a une première extrémité C1 et une deuxième extrémité C2.

On note respectivement :

T1 le temps de transit de la vitesse de groupe dans la première bobine 11,
T2 le temps de transit de la vitesse de groupe dans la deuxième bobine 12, et
T3 le temps de transit de la vitesse de groupe dans la troisième bobine 13.

Les temps de transit T1, T2 et T3 sont tous différents deux à deux. Dans un exemple de réalisation : T1 ≤ 0.9 x T2 et 1.1 x T2 ≤ T3. Par exemple, les bobines 11, 12, 13 sont fabriquées à partir d'une même fibre optique, mais ont des longueurs différentes.

Le système interférométrique triaxe de la figure 6 comporte en outre un troisième séparateur optique 31 disposé sur le trajet optique du premier faisceau modulé 150 et un quatrième séparateur optique 32 disposé sur le trajet optique du deuxième faisceau modulé 250. De façon avantageuse, pour un système à trois bobines de fibre optique 11, 12 et 13, le troisième et le quatrième séparateur optique comportent chacun un séparateur optique à une entrée et trois sorties. Un séparateur optique à une entrée et trois sorties peut être constitué d'un coupleur 1x3 ou, de manière alternative, d'un coupleur 3x3 dans lequel on n'utilise qu'une des trois entrées. De manière alternative, le troisième et/ou quatrième séparateur optique peut être formé d'une série de coupleurs 2x2 disposés de manière arborescente, de manière à séparer spatialement les faisceaux modulés en trois faisceaux. Avantageusement, le troisième séparateur optique 31 et le quatrième séparateur optique 32 sont constitués chacun d'un coupleur 1*3 et sont intégrés sur un circuit intégré optique planaire en niobate de lithium, qui comporte aussi le modulateur optique 4, le premier séparateur optique 3 et un guide d'onde polarisant 5.

La voie optique d'entrée du troisième séparateur optique 31 est reliée par fibre optique à une voie de sortie du modulateur optique 4 et la voie optique d'entrée du quatrième séparateur optique 32 est reliée par fibre optique à une autre voie de sortie du modulateur optique 4.

Une des trois voies optiques de sortie du troisième séparateur optique 31 est reliée à la première extrémité A1 de la première bobine de fibre optique 11, la deuxième voie optique de sortie du troisième séparateur optique 31 est reliée à la première extrémité B1 de la deuxième bobine de fibre optique 12 et la troisième voie optique de sortie du troisième séparateur optique 31 est reliée à la première extrémité C1 de la troisième bobine de fibre optique 13.

De manière analogue, une des trois voies optiques de sortie du quatrième séparateur optique 32 est reliée à la seconde extrémité A2 de la première bobine de fibre optique 11 ; la deuxième voie optique de sortie du quatrième séparateur optique 32 est reliée à la seconde extrémité B2 de la deuxième bobine de fibre optique 12 et la troisième voie optique de sortie du quatrième séparateur optique 32 est reliée à la seconde extrémité C2 de la troisième bobine de fibre optique 13.

Ainsi, le troisième séparateur optique 31 sépare spatialement le premier faisceau modulé 150 en une première fraction du premier faisceau modulé 151, une deuxième fraction du premier faisceau modulé 152 et une troisième fraction du premier faisceau modulé 153. La première fraction du premier faisceau modulé 151 est injectée sur la première extrémité A1 de la première bobine de fibre optique 11. Simultanément, la deuxième fraction du premier faisceau modulé 152 est injectée sur la première extrémité B1 de la deuxième bobine de fibre optique 12 et la troisième fraction du premier faisceau modulé 153 est injectée sur la première extrémité C1 de la troisième bobine de fibre optique 13. Les première, deuxième et troisième fractions du premier faisceau modulé 151, 152 et 153 sont ainsi appliquées simultanément et en parallèle sur les premières extrémités A1, respectivement B1, C1 des trois bobines de fibre optique 11, respectivement 12 et 13. De préférence, le troisième séparateur optique 31 est équiréparti en intensité de manière à ce que les première, deuxième et troisième fractions du premier faisceau modulé 151, 152 et 153 aient la même intensité. Toutefois, une différence d'intensité entre les faisceaux 151, 152 et 153 n'altère pas notablement le fonctionnement du système interférométrique.

De manière analogue, le quatrième séparateur optique 32 sépare le deuxième faisceau modulé 250 en une première fraction du deuxième faisceau modulé 251, une deuxième fraction du deuxième faisceau modulé 252 et une troisième fraction du deuxième faisceau modulé 253. La première fraction du deuxième faisceau modulé 251 est appliquée sur la seconde extrémité A2 de la première bobine de fibre optique 11. Simultanément, la deuxième fraction du deuxième faisceau modulé 252 est appliquée sur la seconde extrémité B2 de la deuxième bobine de fibre optique 12 et la troisième fraction du deuxième faisceau modulé 253 est appliquée sur la seconde extrémité C2 de la troisième bobine de fibre optique 13. Les première, deuxième et troisième fractions du deuxième faisceau modulé 251, 252, 253 sont ainsi appliquées simultanément et en parallèle sur une seconde extrémité A2, respectivement B2 et C2 des trois bobines de fibre optique 11, respectivement 12 et 13. De préférence, les première, deuxième et troisième fractions du deuxième faisceau modulé 261, 262, 263 ont la même amplitude.

Ainsi, la première fraction du premier faisceau modulé 151 et la première fraction du deuxième faisceau modulé 251 parcourent la première bobine 11 avec un temps de transit T1 dans des directions contrapropagatives. Simultanément, la deuxième fraction du premier faisceau modulé 152 et la deuxième fraction du deuxième faisceau modulé 252 parcourent la deuxième bobine 12 avec un temps de transit T2 dans des directions contrapropagatives. Et de même, simultanément, la troisième fraction du premier faisceau modulé 153 et la troisième fraction du deuxième faisceau modulé 253 parcourent la troisième bobine 13 avec un temps de transit T3 dans des directions contrapropagatives.

Le troisième séparateur optique 31 reçoit d'une part, issu de la première extrémité A1 de la première bobine 11, la première fraction du deuxième faisceau modulé 261 ayant parcouru la première bobine 11, d'autre part, de la première extrémité B1 de la deuxième bobine 12, la deuxième fraction du deuxième faisceau modulé 262 ayant parcouru la deuxième bobine 12 et enfin de la première extrémité C1 de la troisième bobine 13, la troisième fraction du deuxième faisceau modulé 263 ayant parcouru la troisième bobine 13. Le troisième séparateur optique 31 recombine par superposition ces trois faisceaux 261, 262, 263 ayant parcouru respectivement la première bobine 11, la deuxième bobine 12 et la troisième bobine 13 pour former un faisceau recombiné 260. Les différences de temps de transit entre les bobines de fibre 11, 12 et 13 sont supérieures au temps de décohérence de la source, si bien que ces trois faisceaux 261, 262, 263 n'interfèrent pas entre eux.

Le quatrième séparateur optique 32 reçoit d'une part, issu de la deuxième extrémité A2 de la première bobine 11, la première fraction du premier faisceau modulé 161 ayant parcouru la première bobine 11, d'autre part, de la deuxième extrémité B2 de la deuxième bobine 12, la deuxième fraction du premier faisceau modulé 162 ayant parcouru la deuxième bobine 12 et enfin de la deuxième extrémité C2 de la troisième bobine 13, la troisième fraction du premier faisceau modulé 163 ayant parcouru la troisième bobine 13. Le quatrième séparateur optique 32 recombine par superposition sans interférences ces trois faisceaux 161, 162 et 163 ayant parcouru respectivement la première bobine 11, la deuxième bobine 12 et la troisième bobine 13 pour former un faisceau recombiné 160.

Le premier coupleur-séparateur optique 3 reçoit le faisceau recombiné 160 et le faisceau recombiné 260. Le coupleur-séparateur optique 3 superpose les faisceaux recombinés 160 et 260 pour former un seul faisceau interférométrique 330. Plus précisément, le faisceau interférométrique 330 est formé par la superposition des recombinaisons respectivement des faisceaux 161 et 261 ayant parcouru la première bobine 11 avec un temps de transit T1 dans des directions opposées, des faisceaux 162 et 262 ayant parcouru la deuxième bobine 12 avec un temps de transit T2 dans des directions opposées et enfin des faisceaux 163 et 263 ayant parcouru la troisième bobine 13 avec un temps de transit T3 dans des directions opposées. Le deuxième séparateur optique de source 6 dirige le faisceau interférométrique 330 issu des trois bobines de fibre optique 11, 12 et 13 vers le photodétecteur 2. Le faisceau interférométrique 330 est ici un faisceau composite comprenant une composante de faisceau interférométrique associé à la première bobine, une autre composante de faisceau interférométrique associé à la deuxième bobine et encore une autre composante de faisceau interférométrique associé à la troisième bobine. Le détecteur 2 transmet un signal détecté 730 au système de traitement du signal 800. Le système de traitement 800, numérise et traite numériquement le signal détecté 730 de manière à extraire une mesure 280 du déphasage Sagnac associé respectivement à chacune des bobines de fibre optique, de manière analogue au procédé de démodulation décrit en lien avec la figure 5.

De façon avantageuse, on applique une modulation en créneau à une fréquence de modulation $f_m$, et on détecte les fronts de montée dans le signal interférométrique détecté à des instants déterminés en fonction des temps de transit respectifs T1, T2 et T3.

Dans le cas d'un système interférométrique à trois bobines de fibre optique et d'un signal de modulation carré, on détecte un signal interférométrique formé d'une série de marches. On mesure ces marches à différents instants. De façon avantageuse, on effectue 1+2*3 = 7 acquisitions par période de modulation, la position temporelle de ces acquisitions étant déterminée par la position des fronts des marches. Par exemple, pour un système à trois bobines de fibre optique, de manière analogue au procédé décrit en lien avec la figure 5, on enregistre dans le signal interférométrique détecté trois fronts montants à des instants déterminés t1, t3, t5 puis un front descendant à un instant déterminé t0 et enfin trois fronts montants à des instants déterminés t2, t4 et t6. Plus précisément, les instants t0, t1, t2, t3, t4, t5 et t6 sont déterminés en fonction des temps de transit respectifs T1, T2 et T3 dans les trois bobines et en fonction de la période et du rapport cyclique de modulation.

Les différents déphasages Sagnac associés aux différentes bobines de fibre optique se déduisent par des combinaisons linéaires des 7 acquisitions.

De façon avantageuse, on utilise un mode détection de front montant et/ou descendant pour déclencher les acquisitions et enregistrer l'instant d'arrivée et la hauteur de chaque front montant et/ou descendant. Ainsi, l'acquisition du signal interférométrique est effectuée non pas à des instants prédéterminés ou à une fréquence prédéfinie, mais à des instants t0, t1, t2, t3, t4 qui sont déclenchés (triggered) par l'arrivée de fronts montants et/ou descendants sur le détecteur.

La figure 7 représente schématiquement un système interférométrique à trois bobines de fibre optique selon un mode de réalisation préféré de l'invention, dans lequel un circuit intégré optique multifonction 16 intègre le premier séparateur optique 3, le deuxième séparateur optique 6 et le modulateur optique de phase 4. Des coupleurs diviseurs 1x3 forment le troisième séparateur optique 32 et le quatrième séparateur optique.

### Procédé de modulation-démodulation dans un système interférométrique à trois axes

### Première variante Tm/2 > Ti

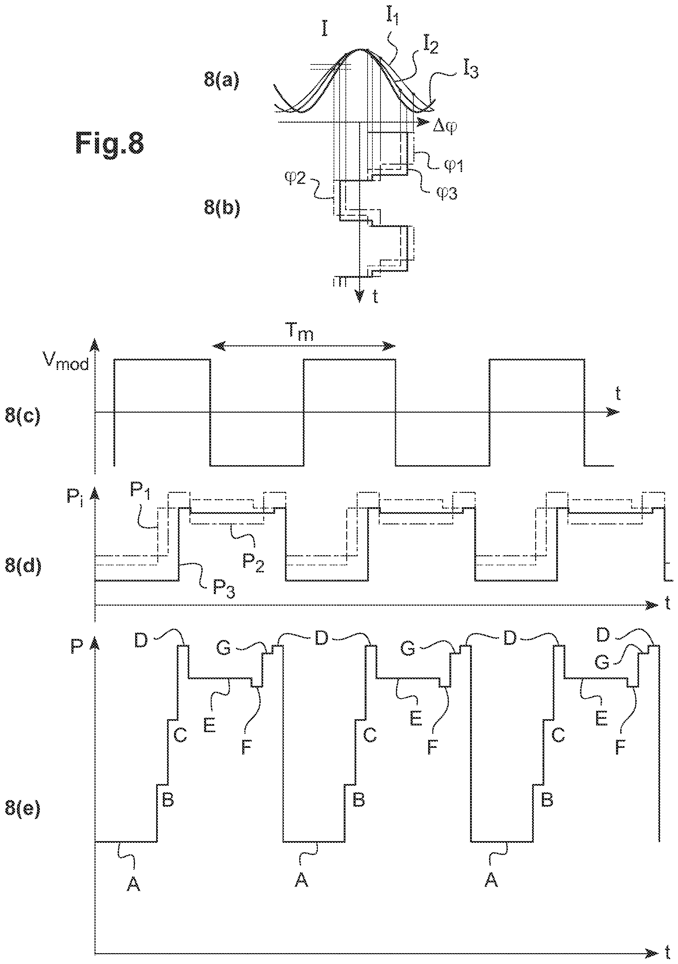

Les figures 8(a)-8(e) représentent l'implémentation d'un procédé de modulation et de démodulation sur un système interférométrique à trois axes tel que décrit en lien avec la figure 7.

Sur la figure 8, la modulation est une modulation en créneau ayant une fréquence de modulation fm et, de manière équivalente, une période de modulation Tm = 1/fm, la demi-période de modulation étant supérieure au temps de transit dans les trois bobines :

$$T1 < T2 < T3 < Tm/2$$

La figure 8(a) représente l'intensité I1, respectivement, I2, I3, du signal interférométrique en fonction du déphasage $\Delta\varphi$ entre deux ondes contrapropagatives dans la première bobine 11, respectivement dans la deuxième bobine 12 et dans la troisième bobine 13. La première bobine 11 est sensible à un déphasage Sagnac

φ1 autour de son axe ; la deuxième bobine 12 est sensible à un déphasage Sagnac φ2 autour de son axe et ; la troisième bobine 13 est sensible à un déphasage Sagnac φ3 autour de son axe.

La figure 8(b) représente, en fonction du temps t, le déphasage Sagnac φ1, respectivement φ2, φ3, autour de l'axe de la première bobine 11, respectivement de la deuxième bobine 12 et de la troisième bobine 13. Les temps de transit respectifs T1, T2 et T3 étant tous différents, pour une même modulation Vmod appliquée simultanément et en parallèle sur les faisceaux parcourant les trois bobines, les signaux de déphasage Sagnac φ1 respectivement φ2 et φ3 arrivent sur le détecteur décalés temporellement. Plus précisément, le déphasage Sagnac φ1 de la première bobine 11 se produit en premier, avant le déphasage Sagnac φ2 de la deuxième bobine 12, et enfin le déphasage Sagnac φ3 de la troisième bobine 13.

Dans cet exemple, l'amplitude de la rotation vue par la deuxième bobine 12 est inférieure à l'amplitude de la rotation vue par la troisième bobine 13, qui est elle-même inférieure à l'amplitude de la rotation vue par la première bobine 11, si bien que :

$$\varphi 2 < \varphi 3 < \varphi 1$$

La figure 8(c) représente le chronogramme de la tension de modulation en créneau et de rapport cyclique de ½ appliquée sur le modulateur optique 4 pour introduire un déphasage optique modulé temporellement entre le premier faisceau modulé 150 et le deuxième faisceau divisé 250, cette modulation étant appliquée simultanément en entrée des trois bobines.

La figure 8(d) représente en superposition le chronogramme de la puissance P1, respectivement P2, P3 du signal interférométrique de la première bobine, respectivement de la deuxième bobine et de la troisième bobine.

La figure 8(e) représente le chronogramme de la puissance du signal interférométrique détecté qui est la somme des puissances P1, P2 et P3 de la figure 8(d).

Avantageusement, on effectue 1+2*3 acquisitions soit 7 acquisitions par période de modulation pour un système à trois bobines de fibre optique. La position temporelle de ces acquisitions est déterminée par la position des fronts et n'est pas régulièrement répartie sur la période de modulation.

Sur la figure 8(e), on observe que la puissance détectée présente des niveaux A, B, C, D, E, F, G à des instants déterminés en fonction d'une part des temps de transit respectifs, T1, T2, T3 dans les bobines, et d'autre part, de la période de modulation et du rapport cyclique de modulation.

On montre que les déphasages Sagnac dans les trois bobines se calculent par des combinaisons linaires à partir des niveaux A-G mesurés.

Par exemple, on déduit les déphasages Sagnac respectifs pour chaque bobine :

$$\varphi 1 = A - E - B + F$$

$$\varphi 2 = B - F + C + G$$

$$\varphi 3 = C - G$$

On observe d'après les équations ci-dessus, que dans le cas d'un interféromètre tri-axe, la mesure du déphasage de chaque axe est indépendante de la mesure des déphasages sur les deux autres axes.

Du point de vue calcul des déphasages Sagnac, seules 6 des 7 mesures sont utilisées dans les formules ci-dessus, la mesure du niveau D n'intervenant pas dans les calculs des déphasages ci-dessus.

### *Deuxième variante Tm/2 < Ti*

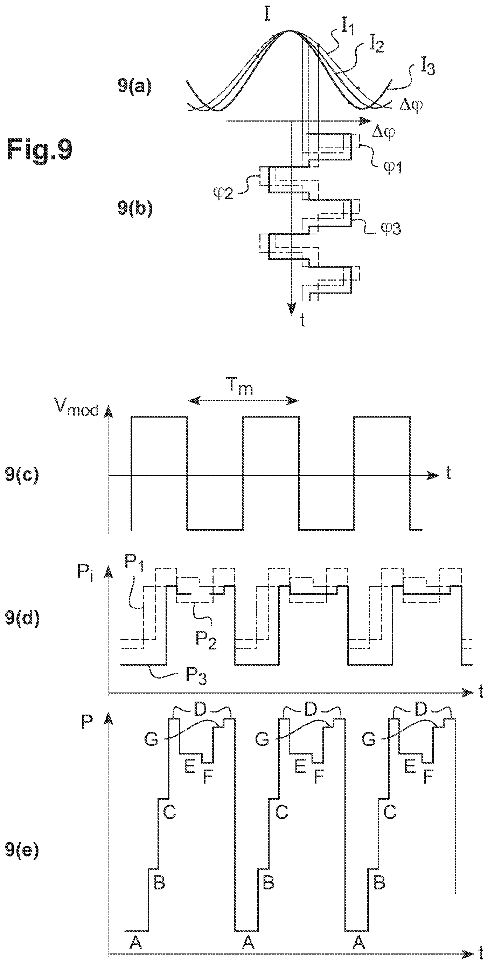

Les figures 9(a)-9(e) représentent l'implémentation d'un procédé de modulation et de démodulation sur un système interférométrique à trois axes tel que décrit en lien avec la figure 7.

Sur la figure 9, la modulation est une modulation en créneau ayant une fréquence de modulation fm, donc une période de modulation Tm= 1/fm, la demi-période de modulation étant inférieure au temps de transit dans les trois bobines :

$$Tm/2 < T1 < T2 < T3$$

La figure 9(a) représente l'intensité I1, respectivement, I2, I3, du signal interférométrique en fonction du déphasage Δφ entre deux ondes contrapropagatives dans la première bobine 11, respectivement dans la deuxième bobine 12 et dans la troisième bobine 13. La première bobine 11 est sensible à un déphasage Sagnac φ1 autour de son axe ; la deuxième bobine 12 est sensible à un déphasage Sagnac $\varphi_2$ autour de son axe et ; la troisième bobine 13 est sensible à un déphasage Sagnac φ3 autour de son axe.

La figure 9(b) représente, en fonction du temps t, le déphasage Sagnac φ1, respectivement φ2, φ3, autour de l'axe de la première bobine 11, respectivement de la deuxième bobine 12 et de la troisième bobine 13. Les temps de transit respectifs T1, T2 et T3 étant tous différents, pour une même modulation Vmod en créneau appliquée simultanément et en parallèle sur les faisceaux parcourant les trois bobines, les signaux de déphasage Sagnac φ1 respectivement φ2 et φ3 arrivent sur le détecteur décalés temporellement. Plus précisément, le déphasage Sagnac φ1 de la première bobine 11 se produit en premier, avant le déphasage Sagnac φ2 de la deuxième bobine 12, et enfin le déphasage Sagnac φ3 de la

troisième bobine 13.

Dans l'exemple représenté, l'amplitude de la rotation vue par la deuxième bobine 12 est inférieure à l'amplitude de la rotation vue par la troisième bobine 13, qui est elle-même inférieure à l'amplitude de la rotation vue par la première bobine 11, si bien que :

$$\varphi 2 < \varphi 3 < \varphi 1$$

La figure 9(c) représente le chronogramme de la tension de modulation en créneau et de rapport cyclique de ½ appliquée sur le modulateur optique 4 pour introduire un déphasage optique modulé temporellement entre le premier faisceau modulé 150 et le deuxième faisceau divisé 250, cette modulation étant appliquée simultanément en entrée des trois bobines.

La figure 9(d) représente en superposition le chronogramme de la puissance P1, respectivement P2, P3 du signal interférométrique de la première bobine, respectivement de la deuxième bobine et de la troisième bobine.

La figure 9(e) représente le chronogramme de la puissance du signal interférométrique détecté qui est la somme des puissances P1, P2 et P3 de la figure 9(d).

De manière analogue à la figure 8, on observe sur la figure 9(e), que la puissance détectée présente des niveaux A, B, C, D, E, F, G à des instants déterminés en fonction d'une part des temps de transit respectifs, T1, T2, T3 dans les trois bobines, et d'autre part, de la période de modulation et du rapport cyclique de modulation. Les instants d'acquisition correspondant aux niveaux A-G sont donc différents d'une part dans le cas de la figure 8(e) où Tm/2 > Ti et d'autre part dans le cas de la figure 9(e) où Tm/2 < Ti, où Ti représente le temps de transit dans les bobines (Ti= T1, T2 ou T3).

Avantageusement, on effectue 1+2*3 acquisitions soit 7 acquisitions par période de modulation pour un système à trois bobines de fibre optique. La position temporelle de ces acquisitions est déterminée par la position des fronts et n'est pas régulièrement répartie sur la période de modulation.

On montre que les déphasages Sagnac dans les trois bobines se calculent par des combinaisons linaires à partir des niveaux A-G mesurés.

La même formule que pour la figure 8(e), s'applique pour en déduire les déphasages Sagnac respectifs pour chaque bobine :

$$\varphi 1 = A - E - B + F$$

$$\varphi 2 = B - F + C + G$$

$$\varphi 3 = C - G$$

En effet, la modification de la durée Tm affecte seulement la durée des niveaux A et E, mais n'affecte pas la durée des autres niveaux, ni la hauteur des niveaux A-G.

On observe que pour les mesures des déphasages Sagnac, seules 6 composantes suffisent, la mesure de D n'intervenant pas dans les formules ci-dessus.

Un système interférométrique à deux ou trois axes et le procédé de modulation/démodulation d'un signal interférométrique décrit en lien avec les figures 4 à 9 se généralise à un système interférométrique comportant plus de trois bobines de fibres optique reliées en parallèle à une seule source, un seul détecteur et un seul dispositif de modulation optique de phase commun, pourvu que les différentes bobines de fibre optique aient des temps de transit différents, et que le système de traitement du signal soit adapté pour détecter les composantes du signal interférométrique composite en fonction des temps de transit respectifs de chacune des bobines de fibre optique.

Dans le cas d'un système à N bobines de fibre optique, on effectue 2*N acquisitions par période de modulation, la position temporelle de ces acquisitions étant déterminée, ou déclenchée, par la position des fronts des marches dans le signal interférométrique détecté. Les différents déphasages Sagnac associés aux différentes bobines de fibre optique se déduisent par des combinaisons linéaires des 2* N acquisitions.

La fréquence de modulation de phase $f_m$ peut être choisie soit :

- inférieure à la fréquence propre de chacune des bobines de fibre optique, ce qui permet d'utiliser un système électronique plus lent, et moins coûteux ;
- supérieure à la fréquence propre de chacune des bobines de fibre optique, ce qui permet une meilleure dynamique de mesure ; ou égale à la fréquence propre de l'une des bobines de fibre optique.

**Revendications**

1. Système interférométrique à fibre optique multiaxe comportant :

    - une source lumineuse commune (1) adaptée pour émettre un faisceau source (100) ayant une intensité constante en fonction du temps;
    - une pluralité de N bobines de fibre optique (11, 12, 13), chaque bobine formant un trajet optique en anneau autour d'un axe ;
    - un premier moyen de séparation optique (3) adapté pour séparer spatialement le faisceau source (100) en un premier faisceau divisé (140) et un deuxième faisceau divisé (240) ;
    - des moyens de modulation de phase communs (4) adaptés pour appliquer un déphasage modulé temporellement à une période de modulation $T_m$ entre le premier et le deuxième faisceaux divisés (140, 240) et pour former un premier faisceau modulé en phase (150) et un deuxième faisceau modulé en phase (250) ;

- un photodétecteur commun (2) ; et
- un système de traitement du signal commun (800) ;

le système étant adapté en ce que:

- les N bobines de fibre optique (11, 12, 13) sont reliées en parallèle, de manière à injecter simultanément une fraction du premier faisceau modulé en phase (151, 152, 153) à une première extrémité de chaque bobine (11, 12, 13) et une fraction du deuxième faisceau modulé en phase (251, 252, 253) à une deuxième extrémité de chaque bobine (11, 12, 13), lesdites N bobines de fibre optique (11, 12, 13) ayant des temps de transit T1, T2, ... TN respectifs tous différents les uns des autres ;

- les moyens de modulation de phase communs (4) étant adaptés pour appliquer simultanément en entrée des N bobines un déphasage modulé temporellement en créneau constitué à chaque période de modulation $T_m$ de fronts montants aux instants 0 et $T_m$ et d'un front descendant à l'instant $t = T_m/2$ ;

- le premier moyen de séparation optique (3) étant adapté pour recombiner lesdites fractions du premier faisceau modulé (161, 162, 163) et lesdites fractions du deuxième faisceau modulé (261, 262, 263) ayant parcouru les N bobines contrapropagativement pour former un faisceau interférométrique (320, 330);

- le photodétecteur étant adapté pour recevoir le faisceau interférométrique et pour déclencher des acquisitions et enregistrer l'instant d'arrivée et la hauteur de chaque front montant et/ou descendant dans le signal interférométrique détecté (720, 730), ledit signal interférométrique détecté (720, 730) comprenant au moins 2*N acquisitions par période de modulation, la position temporelle de ces acquisitions étant déclenchée par la position des fronts montants et/ou descendants dans le signal interférométrique détecté ; et

- le système de traitement du signal (800) étant adapté pour traiter le signal interférométrique détecté (720, 730) par le photodétecteur (2), l'étape de traitement des au moins 2*N acquisitions du signal interférométrique détecté comprenant des opérations de combinaison linéaires desdites au moins 2*N acquisitions pour en déduire au moins une pluralité de N mesures de déphasage Sagnac associées respectivement à chacune des N bobines de fibre optique (11, 12, 13) en fonction des temps de transit respectifs T1, T2, ... TN dans les différentes bobines.

2. Système interférométrique à fibre optique multiaxe selon la revendication 1 comprenant en outre :

- un deuxième moyen de séparation optique (6) disposé entre la source lumineuse commune (1) et le photodétecteur commun (2) ;
- des troisièmes moyens de séparation optique (21, 31) disposés sur le chemin optique du premier faisceau modulé (150) entre les moyens de modulation de phase (4) et les premières extrémités (A1, B1, C1) de chacune des N bobines de fibre optique (11, 12, 13) ;
- des quatrièmes moyens de séparation optique (22, 32) disposés sur le chemin optique du deuxième faisceau modulé (250) entre les moyens de modulation de phase (4) et les deuxièmes extrémités (A2, B2, C2) de chacune des N bobines de fibre optique (11, 12, 13) ;
- les troisièmes moyens de séparation optique (21, 31) et les quatrièmes moyens de séparation optique (22, 32) ayant chacun au moins une entrée et N sorties de manière à transmettre simultanément et en parallèle une fraction du premier faisceau modulé (151, 152, 163) sur la première extrémité (A1, B1, C1) de chacune des N bobines de fibre optique (10, 11) et une fraction du deuxième faisceau modulé (251, 252, 263) sur la deuxième extrémité (A2, B2, C2) de chacune des N bobines de fibre optique (11, 12, 13) et de manière à ce que lesdites fractions du premier faisceau modulé (151, 152, 153) et lesdites fractions du deuxième faisceau modulé (251, 252, 253) se propagent dans des directions opposées dans chacune des bobines (11,12, 13).

3. Système interférométrique à fibre optique selon la revendication 2 comportant un circuit optique intégré planaire (10) comportant :

- le premier moyen de séparation optique (3) ;
- les moyens de modulation de phase (4) communs ; et
- les troisièmes et quatrièmes moyens de séparation optique (21, 22, 31, 32).

4. Système interférométrique à fibre optique selon la revendication précédente dans lequel le premier moyen de séparation optique (3) comporte une jonction Y.

5. Système interférométrique à fibre optique selon l'une des revendications précédentes comportant un convertisseur numérique analogique (9) adapté pour appliquer une tension de modulation (190, 290) sur les moyens de modulation de phase communs (4) de manière à générer un déphasage modulé à une fréquence de modulation $f_m$.

**6.** Système interférométrique à fibre optique selon l'une des revendications précédentes dans lequel les troisièmes moyens de séparation optique (21, 31) et respectivement les quatrièmes moyens de séparation optique (22, 32) comprennent un ou plusieurs coupleurs 2x2 disposés en série, un coupleur 1xN ou un coupleur 3x3.

**7.** Système interférométrique à fibre optique selon l'une des revendications précédentes dans lequel les temps de transit T1, T2 et T3 sont définis comme suit : T1 ≤ 0.9 x T2 et 1.1 x T2 ≤T3.

**8.** Procédé de mesure interférométrique d'une pluralité de déphasages dans un système interférométrique comprenant N bobines de fibre optiques (11, 12, 13) optiquement couplées en parallèle à une source commune, un modulateur de phase commun et un détecteur commun, lesdites N bobines de fibre optique ayant respectivement des temps de transit T1, T2, ... TN tous différents, le procédé comprenant les étapes suivantes :

- Séparation spatiale d'un faisceau source (100) ayant une intensité constante en fonction du temps en un premier faisceau divisé (140) et un deuxième faisceau divisé (240) ;
- Application simultanée en entrée des N bobines d'un déphasage modulé temporellement entre le premier faisceau divisé (140) et le deuxième faisceau divisé (240) pour former un premier faisceau modulé en phase (150) et un deuxième faisceau modulé en phase (250), le déphasage modulé temporellement en créneau étant constitué à chaque période de modulation $T_m$ de fronts montants aux instants 0 et $T_m$ et d'un front descendant à l'instant t=$T_m$/2 ;
- Séparation spatiale du premier faisceau modulé (150) en N fractions du premier faisceau modulé (151, 152, 153) et séparation spatiale du deuxième faisceau modulé (250) en N fractions du deuxième faisceau modulé (251, 252, 253) ;
- Injection simultanée et en parallèle sur la pluralité de bobines de fibre optique (11, 12, 13) respectivement, d'une fraction du premier faisceau modulé (151, 152, 153) à la première extrémité (A1, B1, C1) de chaque bobine de fibre optique (11, 12, 13) et d'une fraction du deuxième faisceau modulé (251, 252, 253) à la deuxième extrémité (A2, B2, C2) de ladite bobine de fibre optique (11, 12, 13), de manière à ce que chacune desdites fractions du premier faisceau modulé (151, 152, 153) et chacune desdites fractions du deuxième faisceau modulé (251, 252, 253) parcourent respectivement une bobine de fibre optique (11, 12, 13) dans des directions contrapropagatives avec respectivement un temps de transit T1, T2, ... TN différent pour chacune des N bobines de fibre optique (11, 12, 13) ;
- Recombinaison optique (22, 32) des N fractions de premier faisceau modulé (161,162,163) ayant parcouru chacun une bobine de fibre optique (11, 12, 13) pour former un premier faisceau recombiné (160) ;
- Recombinaison optique (21, 31) des N fractions de deuxième faisceau modulé (261, 262,263) ayant parcouru chacun une bobine de fibre optique pour former un second faisceau recombiné (260) ;
- Recombinaison du premier faisceau de recombiné (160) et du second faisceau recombiné (260) pour former un faisceau interférométrique (320, 330) modulé temporellement en fonction des temps de transit T1, T2, ... TN respectifs dans les différentes bobines de fibre optique (11, 12, 13) ;
- Détection du faisceau interférométrique (320, 330) et génération d'un signal électronique interférométrique (720, 730) ;
- Enregistrement du signal électronique interférométrique à une série d'au moins 2*N instants, le signal électronique interférométrique (720, 730) comprenant au moins 2*N acquisitions par période de modulation, la position temporelle de ces acquisitions étant déclenchée par la position des fronts des marches dans le signal interférométrique détecté, avec enregistrement de l'instant d'arrivée et de la hauteur de chaque front montant et/ou descendant dans le signal interférométrique détecté (720, 730), en fonction des temps de transit respectifs T1, T2, ...TN dans les bobines de fibre optique (11, 12, 13);
- Traitement des au moins 2*N acquisitions du signal électronique interférométrique enregistrées à l'étape précédente pour en déduire une pluralité de N mesures de déphasage Sagnac associées respectivement à chacune des N bobines de fibre optique (11, 12, 13), l'étape de traitement des au moins 2*N acquisitions du signal électronique interférométrique enregistrées comprenant des opérations de combinaison linéaires desdites au moins 2*N acquisitions pour en déduire au moins la pluralité de N mesures de déphasage Sagnac associées respectivement à chacune des N bobines de fibre optique (11, 12, 13).

**9.** Procédé de mesure interférométrique selon la revendication 8 dans lequel la fréquence de modulation $f_m$ est égale à la fréquence propre $f_p$ de l'une des bobines de fibre optique, ladite bobine ayant un

temps de transit $T_i$, et la fréquence propre étant définie comme suit : $f_p = 1/(2.T_i)$.

10. Procédé de mesure interférométrique selon la revendication 8 dans lequel la fréquence de modulation $f_m$ est inférieure à la fréquence propre de toutes les bobines de fibre optique.

11. Procédé de mesure interférométrique selon la revendication 8 dans lequel la fréquence de modulation $f_m$ est supérieure à la fréquence propre de toutes les bobines de fibre optique, la fréquence de modulation étant inférieure à :

$$f_m \leq \frac{1}{2 \times (T_{MAX} - T_{min})}$$

où $T_{MAX}$ représente le maximum des temps de transit T1, T2,...TN de toutes les bobines et $T_{min}$ représente le minimum des temps de transit T1, T2,...TN de toutes les bobines.

**Patentansprüche**

1. Interferometrisches System mit multiaxialen Lichtwellenleitern mit

     - einer gemeinsamen Lichtquelle (1), die dazu ausgelegt ist, einen Quellenstrahl (100) abzustrahlen, der in Abhängigkeit von der Zeit eine konstante Lichtstärke hat,
     - einer Anzahl N Lichtwellenleiterspulen (11, 12, 13), wobei jede Spule einen ringförmigen Weg um eine Achse bildet,
     - einem ersten optischen Trennmittel (3), das dazu ausgelegt ist, den Quellenstrahl (100) räumlich in einen ersten Teilstrahl (140) und einen zweiten Teilstrahl (240) zu trennen,
     - gemeinsamen Phasenmodulationsmitteln (4), die dazu ausgelegt sind, auf einen Modulationszeitraum $T_m$ eine zeitlich modulierte Phasenverschiebung zwischen dem ersten und dem zweiten Teilstrahl (140, 240) anzuwenden und einen ersten phasenmodulierten Strahl (150) und einen zweiten phasenmodulierten Strahl (250) zu bilden,
     - einem gemeinsamen Lichtsensor (2) und
     - einem gemeinsamen Signalverarbeitungssystem (800),

wobei das System so ausgelegt ist, daß

     - die N Lichtwellenleiterspulen (11, 12, 13) parallel miteinander verbunden sind, um einen Teil des ersten phasenmodulierten Strahls (151, 152, 153) an einem ersten Ende jeder Spule (11, 12, 13) und einen Teil des zweiten phasenmodulierten Strahls (251, 252, 253) an einem zweiten Ende jeder Spule (11, 12, 13) einzubringen, wobei die N Lichtwellenleiterspulen (11, 12, 13) jeweils voneinander verschiedene Durchlaufzeiten T1, T2, ..., TN aufweisen,
     - wobei die gemeinsamen Phasenmodulationsmittel (4) dazu ausgelegt sind, an den Eingängen der N Spulen gleichzeitig eine zeitlich rechteckartig modulierte Phasenverschiebung zu bewirken, die bei jedem Modulationszeitraum $T_m$ aus ansteigenden Flanken zu den Zeitpunkten 0 und $T_m$ und einer abfallenden Flanke zum Zeitpunkt $t = T_m/2$ gebildet sind,
     - wobei das erste optische Trennmittel (3) dazu ausgelegt ist, die Teile des ersten modulierten Strahls (161, 162, 163) und die Teile des zweiten modulierten Strahls (261, 262, 263), die die N Spulen gegensinnig durchlaufen haben, zu rekombinieren, um einen interferometrischen Strahl (320, 330) zu bilden,
     - wobei der Lichtsensor dazu ausgelegt ist, den interferometrischen Strahl zu empfangen und Erfassungen auszulösen und den Eingangszeitpunkt und die Höhe jeder ansteigenden und/oder abfallenden Flanke im erfaßten interferometrischen Signal (720, 730) zu speichern, wobei das erfaßte interferometrische Signal (720, 730) je Modulationszeitraum wenigstens 2N Erfassungen aufweist, wobei die zeitliche Position dieser Erfassungen durch die Position der ansteigenden und/oder abfallenden Flanken im erfaßten interferometrischen Signal ausgelöst wird,
und
     - wobei das Signalverarbeitungssystem (800) dazu ausgelegt ist, das durch den Lichtsensor (2) erfaßte interferometrische Signal (720, 730) zu verarbeiten, wobei der Schritt des Verarbeitens der wenigstens 2N erfassungen des erfaßten interferometrischen Signals lineare Kombinationsvorgänge der wenigstens 2N Erfassungen aufweist, um daraus wenigstens eine Mehrzahl von N Messungen von Sagnac-Phasenverschiebungen abzuleiten, die jeweils jeder der N Lichtwellenleiterspulen (11, 12, 13) in Abhängigkeit von den jeweiligen Durchlaufzeiten T1, T2, ... TN in den verschiedenen Spulen zugeordnet sind.

2. Interferometrisches System mit multiaxialen Lichtwellenleitern gemäß Anspruch 1, das außerdem

     - ein zwischen der gemeinsamen Lichtquelle (1) und dem gemeinsamen Lichtsensor (2) angeordnetes zweites optisches Trennmittel (6),
     - dritte optische Trennmittel (21, 31), die auf dem optischen Weg des ersten modulierten Strahls (150) zwischen den Phasenmodulationsmitteln (4) und den ersten Enden (A1, B1, C1) jeder der N Lichtwellenleiterspulen (11, 12, 13) angeordnet sind,

- vierte optische Trennmittel (22, 32), die auf dem optischen Weg des zweiten modulierten Strahls (250) zwischen den Phasenmodulationsmitteln (4) und den zweiten Enden (A2, B2, C2) jeder der N Lichtwellenleiterspulen (11, 12, 13) angeordnet sind,

- wobei die dritten optischen Trennmittel (21, 31) und die vierten optischen Trennmittel (22, 32) jeweils wenigstens einen Eingang und N Ausgänge aufweisen, um gleichzeitig und parallel einen Teil des ersten modulierten Strahls (151, 152, 163) auf das erste Ende (A1, B1, C1) jeder der N Lichtwellenleiterspulen (10, 11) und einen Teil des zweiten modulierten Strahls (251, 252, 263) auf das zweite Ende (A2, B2, C2) jeder der N Lichtwellenleiterspulen (11, 12, 13) zu übertragen und damit sich die Teile des ersten modulierten Strahls (151, 152, 153) und die Teile des zweiten modulierten Strahls (251, 252, 253) in entgegengesetzten Richtungen in jeder der Spulen (11, 12, 13) ausbreiten,

aufweist.

3. Interferometrisches System mit Lichtwellenleitern gemäß Anspruch 2, das einen ebenen integrierten optischen Kreis aufweist, der

- das erste optische Trennmittel (3),
- die gemeinsamen Phasenmodulationsmittel (4) und
- die dritten und vierten optischen Trennmittel (21, 22, 31, 32)

aufweist.

4. Interferometrisches System mit Lichtwellenleitern gemäß dem vorangehenden Anspruch, bei dem das erste optische Trennmittel (3) einen Y-Übergang aufweist.

5. Interferometrisches System mit Lichtwellenleitern gemäß einem der vorangehenden Ansprüche, das einen Digital-Analog-Wandler (9) aufweist, der dazu ausgelegt ist, eine Modulationsspannung (190, 290) an die gemeinsamen Phasenmodulationsmittel (4) anzulegen, um eine mit einer Modulationsfrequenz $f_m$ modulierte Phasenverschiebung zu erzeugen.

6. Interferometrisches System mit Lichtwellenleitern gemäß einem der vorangehenden Ansprüche, bei dem die dritten optischen Trennmittel (21, 31) und die vierten optischen Trennmittel (22, 32) jeweils einen oder mehrere in Reihe angeordnete 2x2-Koppler, einen 1xN-Koppler oder einen 3x3-Koppler aufweisen.

7. Interferometrisches System mit Lichtwellenleitern gemäß einem der vorangehenden Ansprüche, bei dem die Durchlaufzeiten T1, T2 und T3 wie folgt definiert sind: T1 ≤ 0,9 x T2 und 1,1 x T2 ≤ T3.

8. Interferometrisches Meßverfahren einer Mehrzahl von Phasenverschiebungen in einem interferometrischen System, das N optisch parallel mit einer gemeinsamen Quelle, einem gemeinsamen Phasenmodulator und einem gemeinsamen Detektor verbundene Lichtwellenleiterspulen (11, 12, 13) aufweist, wobei die N Lichtwellenleiterspulen jeweils unterschiedliche Durchlaufzeiten T1, T2, ..., TN aufweisen, wobei das Verfahren die folgenden Schritte aufweist:

- räumliches Aufteilen eines eine in Abhängigkeit von der Zeit konstante Stärke aufweisenden Quellenstrahls (100) in einen ersten Teilstrahl (140) und einen zweiten Teilstrahl (240),

- gleichzeitiges Anwenden einer zeitlich rechteckartig modulierten Phasenverschiebung zwischen dem ersten Teilstrahl (140) und dem zweiten Teilstrahl (240) am Eingang der N Spulen, um einen ersten phasenmodulierten Strahl (150) und einen zweiten phasenmodulierten Strahl (250) zu erzeugen, wobei die zeitlich rechteckartig modulierte Phasenverschiebung bei jedem Modulationszeitraum $T_m$ aus ansteigenden Flanken zu den Zeitpunkten 0 und $T_m$ und einer abfallenden Flanke zum Zeitpunkt t = $T_m/2$ gebildet ist,

- räumliches Trennen des ersten modulierten Strahls (150) in N Teile (151, 152, 153) des ersten modulierten Strahls und räumliches Trennen des zweiten modulierten Strahls (250) in N Teile (251, 252, 253) des zweiten modulierten Strahls,

- jeweiliges gleichzeitiges und paralleles Einbringen in die Mehrzahl Lichtwellenleiterspulen (11, 12, 13) eines Teils des ersten modulierten Strahls (151, 152, 153) am ersten Ende (A1, B1, C1) jeder Lichtwellenleiterspule (11, 12, 13) und eines Teils des zweiten modulierten Strahls (251, 252, 253) am zweiten Ende (A2, B2, C2) jeder Lichtwellenleiterspule (11, 12, 13), damit jeder der Teile des ersten modulierten Strahls (151, 152, 153) und jeder der Teile des zweiten modulierten Strahls (251, 252, 253) eine jeweilige Lichtwellenleiterspule (11, 12, 13) in entgegengesetzten Ausbreitungsrichtungen mit jeweils für jede der N Lichtwellenleiterspulen (11, 12, 13) unterschiedlichen Durchlaufzeiten T1, T2, ..., TN durchlaufen,

- optische Rekombination (22, 32) der jeweils eine Lichtwellenleiterspule (11, 12, 13) durchlaufen habenden N Teile des ersten modulierten Strahls (161, 162, 163), um einen ersten rekombinierten Strahl (160) zu bilden,

- optische Rekombination (21, 31) der jeweils eine Lichtwellenleiterspule (11, 12, 13) durchlaufen habenden N Teile des zweiten modulierten Strahls (261, 262, 263), um einen zweiten rekombinierten Strahl (260) zu bilden,

- Rekombination des ersten rekombinierten Strahls (160) mit dem zweiten rekombinierten Strahl (260), um einen in Abhängigkeit von den jeweiligen Durchlaufzeiten T1, T2, ..., TN in den verschiedenen Lichtwellenleiterspulen (11, 12, 13) zeitlich modulierten interferometrischen Strahl (320, 330) zu bilden,

- Erfassen des interferometrischen Strahls (320, 330) und Erzeugen eines interferometrischen elektronischen Signals (720, 730),

- Speichern des interferometrischen elektronischen Signals zu einer Reihe von wenigstens 2*N Zeitpunkten, wobei das interferometrische elektronische Signal (720, 730) wenigstens 2*N Erfassungen je Modulationszeitraum aufweist, wobei die zeitliche Position dieser Erfassungen durch die Position der Flanken der Stufen im erfaßten interferometrischen Signal ausgelöst wird, mit Speichern des Eingangszeitpunkts und der Höhe jeder ansteigenden und/oder abfallenden Flanke im erfaßten interferometrischen Signal (720, 730) in Abhängigkeit von den jeweiligen Durchlaufzeiten T1, T2, ..., TN in den Lichtwellenleiterspulen (11, 12, 13),

- Verarbeiten der wenigstens 2*N Erfassungen des im vorigen Schritt gespeicherten interferometrischen elektronischen Signals, um daraus eine Mehrzahl jeder der N Lichtwellenleiterspulen (11, 12, 13) zugeordneter Sagnac-Phasenverschiebungen abzuleiten, wobei der Schritt des Verarbeitens der wenigstens 2*N Erfassungen des interferometrischen elektronischen Signals Operationen linearer Kombinationen der wenigstens 2*N Erfassungen aufweist, um daraus wenigstens die Mehrzahl jeder der N Lichtwellenleiterspulen (11, 12, 13) zugeordneten Sagnac-Phasenverschiebungen abzuleiten.

9. Interferometrisches Meßverfahren gemäß Anspruch 8, bei dem die Modulationsfrequenz $f_m$ gleich der Eigenfrequenz $f_p$ einer der Lichtwellenleiterspulen ist, wobei die Spule eine Durchlaufzeit $T_i$ aufweist und die Eigenfrequenz wie folgt definiert ist: $f_p = 1 / (2*T_i)$.

10. Interferometrisches Meßverfahren gemäß Anspruch 8, bei dem die Modulationsfrequenz $f_m$ kleiner als die Eigenfrequenz aller Lichtwellenleiterspulen ist.

11. Interferometrisches Meßverfahren gemäß Anspruch 8, bei dem die Modulationsfrequenz $f_m$ größer als die Eigenfrequenz aller Lichtwellenleiterspulen ist, wobei die Modulationsfrequenz kleiner als

$$f_m \leq \frac{1}{2 \times (T_{MAX} - T_{min})}$$

ist, wobei $T_{MAX}$ das Maximum der Durchlaufzeiten T1, T2, .., TN aller Lichtwellenleiterspulen ist und $T_{min}$ das Minimum der Durchlaufzeiten T1, T2, ..., TN aller Lichtwellenleiterspulen ist.

**Claims**

1. A multi-axis fiber optic interferometric system, including:

   - a shared light source (1) adapted to emit a source beam (100) having a constant intensity as a function of time;
   - a plurality of N optical-fiber coils (11, 12, 13), each coil forming a ring optical path about an axis;
   - a first optical separation means (3) adapted to spatially separate the source beam (100) into a first split beam (140) and a second split beam (240) ;
   - shared phase modulation means (4) adapted to apply a time-modulated phase shift at a period of modulation $T_m$ between the first and the second split beams (140, 240) and to form a first phase modulated beam (150) and a second phase modulated beam (250);
   - a shared photodetector (2) ; and
   - a shared signal-processing system (800);

   the system being adapted in that:

   - the N optical-fiber coils (11, 12, 13) are connected in parallel, so as to inject simultaneously a fraction of the first phase modulated beam (151, 152, 153) at a first end of each coil (11, 12, 13) and a fraction of the second phase modulated beam (251, 252, 253) at a second end of each coil (11, 12, 13), said N optical-fiber coils (11, 12, 13) having respective transit times T1, T2, ... TN that are all different from each other;
   - the shared phase modulation means (4) being adapted to apply simultaneously at the first end of the N optical-fiber coils, a rectangular-wave time modulated phase shift consisting, at each period of modulation $T_m$, of rising fronts at in-

stants 0 and $T_m$ and of a falling front at the instant $T_m/2$ ;

- the first optical separation means (3) being adapted to recombine said fractions of the first modulated beam (161, 162, 163) and said fractions of the second modulated beam (261, 262, 263) having travelled counter-propagatively through the N coils to form an interferometric beam (320, 330);

- the photodetector being adapted to receive the interferometric beam and to trigger the acquisitions and record the instant of arrival and the height of each rising and/or falling front in the detected interferometric signal (720, 730), said detected interferometric signal (720, 730) comprising at least 2*N acquisitions per period of modulation, the time position of these acquisitions being triggered by the position of the rising and/or falling fronts in the detected interferometric signal;

- and

- the signal-processing system (800) being adapted to process the interferometric signal (720, 730) detected by the photodetector (2), the step of processing of the at least 2*N acquisitions of the detected interferometric signal comprising operations of linear combination of said at least 2*N acquisitions to deduce therefrom at least a plurality of N measurements of Sagnac phase shift associated with each of the N optical-fiber coils (11, 12, 13), respectively, as a function of the respective transit times T1, T2, ... TN in the different coils.

2. The multi-axis fiber optic interferometric system according to claim 1, further comprising:

- a second optical separation means (6) arranged between the shared light source (1) and the shared photodetector (2);

- third optical separation means (21, 31) arranged on the optical path of the first modulated beam (150) between the phase modulation means (4) and the first ends (A1, B1, C1) of each of the N optical-fiber coils (11, 12, 13);

- fourth optical separation means (22, 32) arranged on the optical path of the second modulated beam (250) between the phase modulation means (4) and the second ends (A2, B2, C2) of each of the N optical-fiber coils (11, 12, 13);

- the third optical separation means (21, 31) and the fourth optical separation means (22, 32) each having at least one entry and N exits so as to transmit simultaneously and in parallel a fraction of the first modulated beam (151, 152, 153) at the first end (A1, B1, C1) of each of the N optical-fiber coils (10, 11) and a fraction of the second modulated beam (251, 252, 253) at the second end (A2, B2, C2) of each of the N optical-fiber coils (11, 12, 13) and so that said fractions of the first modulated beam (151, 152, 153) and said fractions of the second modulated beam (251, 252, 253) propagate in opposite directions in each of said coils (11, 12, 13).

3. The fiber optic interferometric system according to claim 2, including a planar integrated optical circuit (10) including:

- the first optical separation means (3);
- the shared phase modulation means (4) ; and
- the third and fourth optical separation means (21, 22, 31, 32).

4. The fiber optic interferometric system according to the preceding claim, wherein the first optical separation means (3) includes a Y junction.

5. The fiber optic interferometric system according to any of the preceding claims, including a digital-to-analog converter (9) adapted to apply a modulation voltage (190, 290) to the shared phase modulation means (4) so as to generate a phase shift modulated at a modulation frequency $f_m$.

6. The fiber optic interferometric system according to any of the preceding claims, wherein the third optical separation means (21, 31) and, respectively, the fourth optical separation means (22, 32), comprise one or several 2x2 couplers arranged in series, a 1xN coupler or a 3x3 coupler.

7. The fiber optic interferometric system according to any of the preceding claims, wherein the transit times T1, T2 and T3 are defined as follows: $T1 \leq 0.9 \times T2$ and $1.1 \times T2 \leq T3$.

8. A method of interferometric measurement of a plurality of phase shifts in an interferometric system comprising N optical-fiber coils (11, 12, 13) optically coupled in parallel to a shared source, a shared phase modulator and a shared detector, said N optical-fiber coils having respectively transit times T1, T2, ... TN that are all different from each other, the method comprising the following steps:

- spatial separation of a source beam (100) having a constant intensity as a function of time into a first split beam (140) and a second split beam (240) ;

- simultaneous application at a first end of the N coils of a time-modulated phase shift between the first split beam (140) and the second split beam (240) to form a first phase modulated beam (150) and a second phase modulated beam (250), the rectangular-wave time modulated phase shift consisting, at each period of modulation $T_m$, of rising fronts at instants 0 and $T_m$ and of a falling front at the instant Tm/2;

- spatial separation of the first modulated beam (150) into N fractions of the first modulated beam (151, 152, 153) and spatial separation of the second modulated beam (250) into N fractions of the second modulated beam (251, 252, 253);

- simultaneous and parallel injection on the plurality of optical-fiber coils (11, 12, 13), respectively, of a fraction of the first modulated beam (151, 152, 153) at the first end (A1, B1, C1) of each optical-fiber coil and of a fraction of the second modulated beam (251, 252, 253) at the second end (A2, B2, C2) of said optical-fiber coil (11, 12, 13), so that each of said fractions of the first modulated beam (151, 152, 153) and each of said fractions of the second modulated beam (251, 252, 253) travel respectively in counter-propagating directions through an optical-fiber coil (11, 12, 13) with, respectively, a different transit time T1, T2, ... TN for each of the N optical-fiber coils (11, 12, 13) ;

- optical recombination (22, 32) of the N fractions of first modulated beam (161, 162, 163) having each travelled through one optical-fiber coil (11, 12, 13) to form a first recombined beam (160) ;

- optical recombination (21, 31) of the N fractions of second modulated beam (261, 262, 263) having each travelled through one optical-fiber coil to form a second recombined beam (260) ;

- recombination of the first recombined beam (160) and of the second recombined beam (260) to form an interferometric beam (320, 330) time modulated as a function of the respective transit times T1, T2, ... TN in the different optical-fiber coils (11, 12, 13) ;

- detection of the interferometric beam (320, 330) and generation of an interferometric electronic signal (720, 730) ;

- recording of the interferometric electronic signal (720, 730) at a series of at least 2*N instants, the interferometric electronic signal (720, 730) comprising at least 2*N acquisitions per period of modulation, the time position of these acquisitions being triggered by the position of the rising and/or falling fronts in the detected interferometric signal, with recording of the instant of arrival and of the height of each rising and/or falling front in the detected interferometric signal (720, 730), as a function of the respective transit times T1, T2, ... TN in the optical-fiber coils (11, 12, 13) ;

- processing of the at least 2*N acquisitions of the interferometric electronic signal recorded at the preceding step to deduce therefrom a plurality of N measurements of Sagnac phase shift associated with each of the N optical-fiber coils (11, 12, 13), respectively, the step of processing of the recorded at least 2*N acquisitions of the electronic interferometric signal comprising operations of linear combination of said at least 2*N acquisitions to deduce therefrom at least the plurality of N measurements of Sagnac phase shift associated with each of the N optical-fiber coils (11, 12, 13), respectively.

9. The method of interferometric measurement according to claim 8, wherein the modulation frequency $f_m$ is equal to the eigen frequency $f_p$ of one of the optical-fiber coils, said coil having a transit time $T_i$, and the eigen frequency being defined as follows: $f_p$=1/(2.Ti).

10. The method of interferometric measurement according to claim 8, wherein the modulation frequency $f_m$ is lower than the eigen frequency of all the optical-fiber coils.

11. The method of interferometric measurement according to claim 8, wherein the modulation frequency $f_m$ is higher than the eigen frequency of all the optical-fiber coils, the modulation frequency being lower than:

$$f_m \leq \frac{1}{2 \times (T_{MAX} - T_{min})}$$

where $T_{MAX}$ represents the maximum of the transit times T1, T2,... TN of all the coils and $T_{min}$ represents le minimum of the transit times T1, T2,...TN of all the coils.

**Fig.1**

Art antérieur

**Fig.2**

Art antérieur

# Fig.3

3(b)

3(d)

$V_{mod}$

$T_m$

$f_m < f_p$

$\varphi_s$

3(a)

3(c)

Art antérieur

# Fig.4

**Fig.5**

**Fig.6**

**Fig.7**

**Fig.8**

8(a)

8(b)

8(c)

8(d)

8(e)

Fig.9

**RÉFÉRENCES CITÉES DANS LA DESCRIPTION**

**Documents brevets cités dans la description**

- US 4815853 H, H. Lefèvre
- US 5033854 A, A. Matthews, G. Varty, J. Darling

- US 5719674 A, P. Martin, T. Gaiffe, J. Morisse, P. Simonpietri, H. Lefevre
- US 5294972 A

**Littérature non-brevet citée dans la description**

- **H. LEFÈVRE.** *The Fiber optic gyroscope,* 1993